(19) Europäisches Patentamt / European Patent Office / Office européen des brevets

(11) **EP 4 506 935 B1**

(12) **EUROPEAN PATENT SPECIFICATION**

(45) Date of publication and mention
of the grant of the patent:
**04.03.2026 Bulletin 2026/10**

(21) Application number: **23878921.8**

(22) Date of filing: **25.09.2023**

(51) International Patent Classification (IPC):
**G10L 21/0208** *(2013.01)*  **G10L 21/0272** *(2013.01)*
**G06N 3/08** *(2023.01)*  **G10L 17/00** *(2013.01)*
**G10L 25/30** *(2013.01)*  **G06N 3/02** *(2006.01)*

(52) Cooperative Patent Classification (CPC):
**G10L 21/0208; G06N 3/08; G10L 21/0272;**
G06N 3/02; G10L 17/00; G10L 25/30;
G10L 2021/02087

(86) International application number:
**PCT/CN2023/121068**

(87) International publication number:
**WO 2024/082928 (25.04.2024 Gazette 2024/17)**

(54) **VOICE EXTRACTION**

STIMMENEXTRAKTION

EXTRACTION DE LA VOIX

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.10.2022 CN 202211297843**

(43) Date of publication of application:
**12.02.2025 Bulletin 2025/07**

(73) Proprietor: **Tencent Technology (Shenzhen)
Company Limited
Shenzhen, Guangdong 518057 (CN)**

(72) Inventor: **CUI, Guohui
Shenzhen, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(56) References cited:
CN-A- 108 962 237   CN-A- 112 053 695
CN-A- 113 345 461   CN-A- 113 823 293
CN-A- 114 495 973   CN-A- 114 898 762
KR-A- 20200 040 425   US-A1- 2020 227 064

• QUAN WANG ET AL: "VoiceFilter: Targeted Voice
Separation by Speaker-Conditioned
Spectrogram Masking", ARXIV.ORG, CORNELL
UNIVERSITY LIBRARY, 201 OLIN LIBRARY
CORNELL UNIVERSITY ITHACA, NY 14853, 11
October 2018 (2018-10-11), XP080923805

• OCHIAI TSUBASA ET AL: "A Unified Framework
for Neural Speech Separation and Extraction",
ICASSP 2019 - 2019 IEEE INTERNATIONAL
CONFERENCE ON ACOUSTICS, SPEECH AND
SIGNAL PROCESSING (ICASSP), IEEE, 12 May
2019 (2019-05-12), pages 6975 - 6979,
XP033565997, DOI: 10.1109/
ICASSP.2019.8683448

## Description

### RELATED APPLICATION

This application claims priority to Chinese Patent Application No. 2022112978433, filed with the China National Intellectual Property Administration on October 21, 2022, and entitled "VOICE PROCESSING METHOD AND APPARATUS, DEVICE, AND MEDIUM."

### FIELD OF THE TECHNOLOGY

This application relates to the field of artificial intelligence technologies, and in particular, to a voice processing method and apparatus, a device, and a medium.

### BACKGROUND OF THE DISCLOSURE

With development of a computer technology, a voice processing technology emerges. The voice processing technology refers to a technology of performing audio processing on voice signals. Voice extraction is one of the voice processing technologies. A sound of interest to a user may be extracted from a complex voice scenario by using a voice extraction technology. It may be understood that the complex voice scenario may include at least one of multi-person speaking interference, large reverberation, high background noise, music noise, and the like. For example, the user may extract a sound of an object of interest from the complex voice scenario by using the voice extraction technology. In the conventional technology, voice extraction is usually performed on a complex voice directly, and the extracted voice is directly used as a voice of a final to-be-extracted object. However, the voice extracted by using this method usually leaves lots of noise (for example, the extracted voice further includes a sound of another object), resulting in low voice extraction accuracy.

Exemplary prior art techniques can be found in CN 113 345 461 A (BEIJING SOGOU TECH DEV CO) 3 September 2021 (2021-09-03); QUAN WANG ET AL: "VoiceFilter: Targeted Voice Separation by Speaker-Conditioned Spectrogram Masking", ARXIV.ORG, CORNELL UNIVERSITY LIBRARY, 201 OLIN LIBRARY CORNELL UNIVERSITY ITHACA, NY 14853, 11 October 2018 (2018-10-11); US 2020/227064 A1 (XU JIAMING [CN] ET AL) 16 July 2020 (2020-07-16); OCHIAI TSUBASA ET AL: "A Unified Framework for Neural Speech Separation and Extraction", ICASSP 2019 - 2019 IEEE INTERNATIONAL CONFERENCE ON ACOUSTICS, SPEECH AND SIGNAL PROCESSING (ICASSP), IEEE, 12 May 2019 (2019-05-12), pages 6975-6979.

### SUMMARY

According to the invention, a voice processing method, a voice processing apparatus and a computer device are provided in claims 1, 14 and 15 respectively. The dependent claims provide further preferred embodiments.

### BRIEF DESCRIPTION OF THE DRAWINGS

To describe the technical solutions in embodiments of this application or the conventional technology more clearly, the following briefly describes the accompanying drawings for describing the embodiments or the conventional technology. Apparently, the accompanying drawings in the following descriptions show merely the embodiments of this application, and a person of ordinary skill in the art may still obtain other accompanying drawings from disclosed accompanying drawings without creative efforts.

FIG. 1 is a diagram of an application environment of a voice processing method according to an embodiment.
FIG. 2 is a schematic flowchart of a voice processing method according to an embodiment.
FIG. 3 is a schematic diagram of a structure of a network of a voice extraction network according to an embodiment.
FIG. 4 is a schematic diagram of a structure of a network of a model configured to perform voice extraction on a mixed voice according to an embodiment.
FIG. 5 is a schematic diagram of a structure of a network of a primary voice extraction network according to an embodiment.
FIG. 6 is a schematic diagram of a structure of a network of a denoising network according to an embodiment.
FIG. 7 is a schematic diagram of a structure of a network of a registered network according to an embodiment.
FIG. 8 is a diagram of an application environment of a voice processing method according to another embodiment.
FIG. 9 is a schematic diagram of a voice processing method according to an embodiment.
FIG. 10 is a schematic diagram of filtering an initially recognized voice according to an embodiment.
FIG. 11 is a schematic flowchart of a voice processing method according to another embodiment.
FIG. 12 is a block diagram of a structure of a voice processing apparatus according to an embodiment.
FIG. 13 is a diagram of an internal structure of a computer device according to an embodiment.

### DESCRIPTION OF EMBODIMENTS

The technical solutions in embodiments of this application are clearly and completely described below with reference to the accompanying drawings in the embodiments of this application. Apparently, the described embodiments are merely some rather than all of the embodiments of this application.

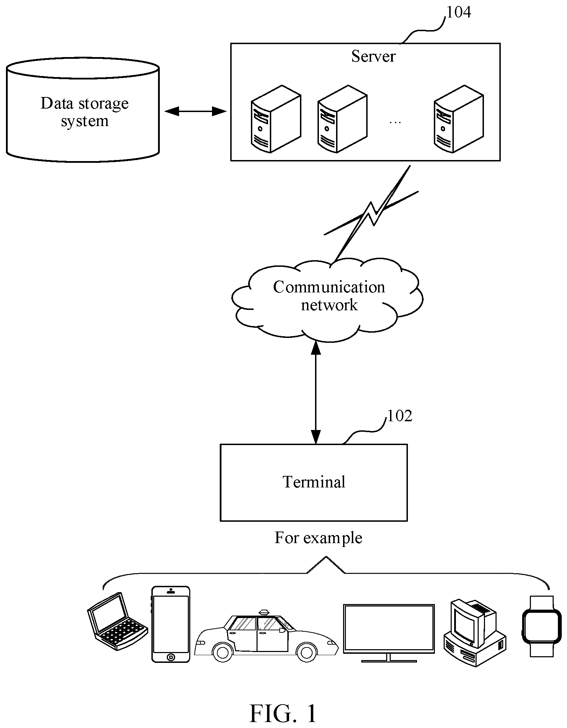

A voice processing method provided in this application may be applied to an application environment shown in FIG. 1. A terminal 102 communicates with a server 104 via a network. A data storage system may store data that the server 104 needs to process. The data storage system may be integrated on the server 104, or placed on a cloud or another server. The terminal 102 may be, but is not limited to, a desktop computer, a notebook computer, a smartphone, a tablet, an Internet of Things device, or a portable wearable device. The Internet of Things device may be a smart speaker, a smart television, a smart air conditioner, a smart vehicle-mounted device, or the like. The portable wearable device may be a smartwatch, a smart band, a head-mounted device, or the like. The server 104 may be an independent physical server, a server cluster or a distributed system including a plurality of physical servers, or a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal 102 and the server 104 may be directly or indirectly connected to each other in a wired or wireless communication manner. This is not limited in this application herein.

The terminal 102 may obtain a registered voice of a speaker, and obtain a mixed voice, the mixed voice including voice information of a plurality of sounding objects, and the plurality of sounding objects including the speaker. The terminal 102 may determine a registered voice feature of the registered voice, and extract an initially recognized voice of the speaker from the mixed voice based on the registered voice feature. The terminal 102 may determine, based on the registered voice feature, a voice similarity between the registered voice and voice information included in the initially recognized voice. The terminal 102 may filter out, from the initially recognized voice, voice information of which voice similarity is lower than a preset similarity, to obtain a clean voice of the speaker.

The voice processing method in some embodiments of this application uses an artificial intelligence technology. For example, the registered voice feature of the registered voice is a feature encoded using the artificial intelligence technology, and the initially recognized voice of the speaker is also a voice recognized using the artificial intelligence technology.

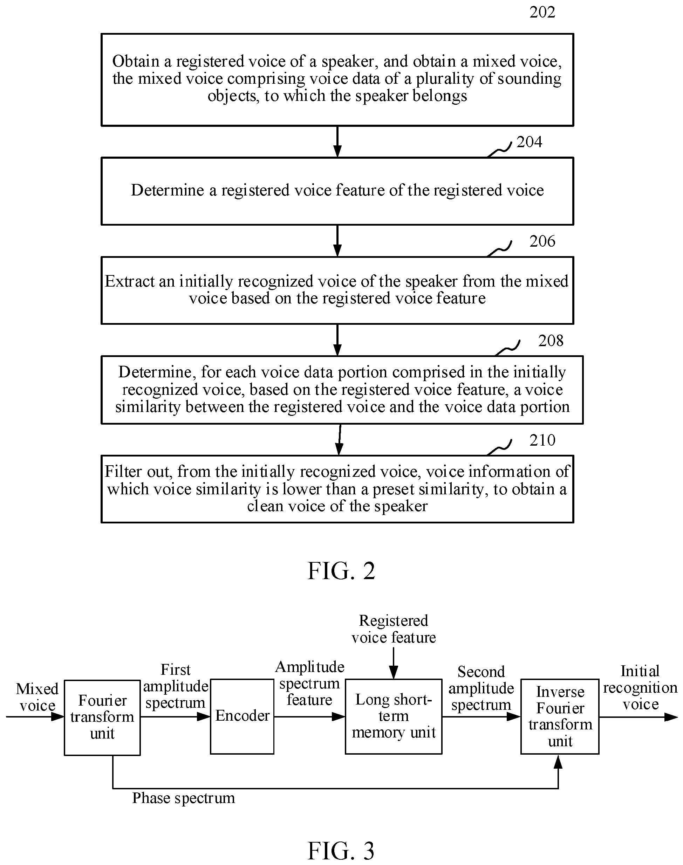

In all embodiments, as shown in FIG. 2, a voice processing method is provided. This embodiment uses an example in which the method is applied to the terminal 102 in FIG. 1 for description, and the method includes the following steps.

Step 202: Obtain a registered voice of a speaker, and obtain a mixed voice, the mixed voice comprising voice data of a plurality of sounding objects, to which the speaker belongs.

The sounding objects are entities that may make a sound, may be natural objects or man-made objects, or may be liveness or non-liveness. The sounding objects include at least one of a character, an animal, an object, or the like. A sounding object that is a target for voice processing may be referred to as a speaker or a target object. It may be understood that the speaker is an object whose voice needs to be extracted by using the voice processing method in this application. The voice may be stored as an audio format file in a form of a digital signal.

The mixed voice is a voice that includes respective voice information of the plurality of sounding objects. The plurality of sounding objects here may all be users, and one of the plurality of sounding objects is the speaker. The mixed voice includes voice information of the speaker. That the mixed voice includes voice information of the speaker may be understood as that sounds recorded in the mixed voice includes a sound of the speaker.

A registered voice is a clean voice registered for a speaker in advance, and is a piece of voice of the speaker prestored in a voice database. It may be understood that the registered voice basically only includes the voice information of the speaker, and does not include voice information of another sounding object other than the speaker, or the voice information of another sounding object other than the speaker is very little and may be ignored.

The speaker may speak a paragraph in a quiet environment, and the terminal may acquire a sound of the speaker during speaking the paragraph, to generate the registered voice. It may be understood that this paragraph does not include a sound of another object other than the speaker. The terminal may acquire what the speaker speaks in the quiet environment, and generate the registered voice of the speaker based on what the speaker speaks in the quiet environment. Quiet may refer to that a decibel value of ambient noise does not exceed a preset decibel value. The preset decibel value may take 30 to 40, or a lower or higher decibel value may be set as needed.

The speaker may speak a paragraph in a noisy environment, and the terminal may acquire a sound of the speaker during speaking the paragraph, to generate the mixed voice. It may be understood that this paragraph includes a sound of another sounding object other than the speaker, and further includes ambient noise. The terminal may acquire what the speaker speaks in the noisy environment, and generate the mixed voice including the voice information of the speaker based on what the speaker speaks in the noisy environment. The noisy environment may refer to an environment that a decibel value of ambient noise exceeds a preset decibel value.

In all embodiments, the terminal may directly use a voice corresponding to what the speaker speaks in the quiet environment as the registered voice of the speaker. The terminal may directly use a voice corresponding to what the speaker speaks in the noisy environment as the mixed voice including the voice information of the speaker.

Step 204: Determine a registered voice feature of the registered voice.

The registered voice feature is a feature of the registered voice, may represent a characteristic of the voice of the speaker, and may also be referred to as a speaker voice feature. The terminal may extract the registered voice feature from the registered voice by using a machine learning model, and may alternatively use an acoustic feature, such as at least one of a mel-frequency cepstrum coefficient (MFCC), a linear prediction coefficient (LPC), a linear prediction cepstrum coefficient (LPCC), a linear spectral frequency (LSF), a discrete wavelet transform, or perceptual linear predictive (PLP). The terminal may extract a feature from the registered voice to obtain the registered voice feature of the registered voice. The registered voice feature of the registered voice may be extracted immediately or extracted and stored in advance.

Step 206: Extract an initially recognized voice of the speaker from the mixed voice based on the registered voice feature.

The registered voice feature may be used for performing initial recognition on the voice information of the speaker in the mixed voice. The initial recognition is rough recognition and used for extracting an initially recognized voice from the mixed voice. The initially recognized voice is a voice comprising one or more voice data portions, and obtained by performing the initial recognition on the voice information of the speaker in the mixed voice. It may be understood that in addition to the voice information of the speaker, the initially recognized voice may further include the voice information of another sounding object other than the speaker. The initially recognized voice is a basis for subsequent processing, and may also be referred to as an initial voice.

The terminal may extract a voice that satisfies a condition of being associated with the registered voice feature from the mixed voice, to obtain the initially recognized voice of the speaker. The condition here is that, for example, values of one or more voice parameters of the two that are a specific segment or piece of voice information in the mixed voice and the registered voice feature satisfy a preset matching condition.

The terminal may perform feature extraction on the registered voice to obtain the registered voice feature of the registered voice. Further, the terminal may perform the initial recognition on the voice information of the speaker in the mixed voice based on the registered voice feature of the registered voice, in other words, perform initial voice extraction on the mixed voice to obtain the initially recognized voice of the speaker.

In all embodiments, the terminal may perform the feature extraction on the mixed voice to obtain a mixed voice feature of the mixed voice. Further, the terminal may perform the initial recognition on the voice information of the speaker in the mixed voice based on the mixed voice feature and the registered voice feature to obtain the initially recognized voice of the speaker. The mixed voice feature is a feature of the mixed voice.

In all embodiments, the initially recognized voice may be extracted by using a pretrained voice extraction model. The terminal may input the mixed voice and the registered voice feature of the registered voice into a voice extraction network to perform the initial recognition on the voice information of the speaker in the mixed voice by using the voice extraction network, to obtain the initially recognized voice of the speaker. The voice extraction network may use a convolutional neural network (CNN).

Step 208: Determine, for each voice data portion comprised in the initially recognized voice, based on the registered voice feature, a voice similarity between the registered voice and the voice data portion.

The terminal may determine, based on the registered voice feature, the voice similarity between the registered voice and the voice information in the initially recognized voice. The voice similarity is a similarity of a voice sound characteristic, and is not basically related to voice content. The voice similarity here is specifically the similarity between the registered voice and the voice information in the initially recognized voice. A greater voice similarity indicates a higher similarity, and a smaller voice similarity indicates a lower similarity. The voice information may be information describing voice sound characteristics, and the voice similarity is mainly used for measuring similarity between voice characteristics of two voices, so as to implement extraction of an audio feature and training and testing of a voice recognition model. The voice similarity is mainly represented by the following several similarity types: Euclidean distance, cosine similarity, cosine distance, Manhattan distance, and the like. For example, in the embodiment, a cosine similarity between voice feature vectors in the voice information is calculated to obtain a voice similarity.

In all embodiments, the terminal may perform the feature extraction on the voice information in the initially recognized voice to obtain a voice information feature. Further, the terminal may determine, based on the registered voice feature and the voice information feature, the voice similarity between the registered voice and the voice information in the initially recognized voice.

Step 210: Filter out, from the initially recognized voice, voice information of which voice similarity is lower than a preset similarity, to obtain a clean voice of the speaker.

The terminal may determine the voice information of which voice similarity is lower than the preset similarity from the initially recognized voice to obtain to-be-filtered voice information. The terminal may filter out the to-be-filtered voice information from the initially recognized voice to obtain the clean voice of the speaker.

The to-be-filtered voice information is voice information to be filtered in the initially recognized voice. The clean voice is a clean voice of the speaker. It may be understood that the clean voice only includes the voice information of the speaker, and does not include voice information of another object other than the speaker. The clean voice of the speaker is a result processed by using the voice processing method in each embodiment of this application, and may be referred to as a target voice.

The terminal may separately determine whether a voice similarity between each voice information in the initially recognized voice and the registered voice is lower than the preset similarity. If the voice similarity is lower than the preset similarity, the terminal may use corresponding voice information as the to-be-filtered voice information. If the voice similarity is higher than or equal to the preset similarity, it may be understood that a voice similarity between the registered voice and the corresponding voice information is high. This means that the voice information is likely to belong to voice information corresponding to the speaker. In this case, the terminal may retain the corresponding voice information.

The preset similarity may be set based on a value range of the voice similarity and a filtering strength. A lower preset similarity indicates a lower filtering strength, so that it is easy to retain some noise. A higher preset similarity indicates a higher filtering strength, so that it is also easy to filter a sound of the speaker. Therefore, the preset similarity may be determined according to actual needs and a test effect within the value range of voice similarity.

The terminal may filter the to-be-filtered voice information in the initially recognized voice. The to-be-filtered voice information may be set as mute in the initially recognized voice of the terminal, and the clean voice of the speaker is generated based on the retained voice information in the initially recognized voice. The retained voice information is voice information that is not muted.

In the foregoing voice processing method, the mixed voice and the registered voice of the speaker are obtained, and the mixed voice includes the voice information of the speaker. The initially recognized voice of the speaker may be initially extracted from the mixed voice based on the registered voice feature of the registered voice, so that the initially recognized voice of the speaker may be extracted preliminarily and accurately. Further, advanced filtering processing is performed based on the initially recognized voice. To be specific, the voice similarity between the registered voice and the voice information in the initially recognized voice is determined based on the registered voice feature, and the voice information of which voice similarity is lower than the preset similarity is filtered out from the initially recognized voice, so that the retained noise in the initially recognized voice may be filtered out, to obtain a cleaner voice of the speaker and improve voice extraction accuracy.

In all embodiments, the extracting an initially recognized voice of the speaker from the mixed voice based on the registered voice feature includes: determining a mixed voice feature of the mixed voice; fusing the mixed voice feature and the registered voice feature of the registered voice to obtain a voice fusion feature; and performing initial recognition on voice information of the speaker in the mixed voice based on the voice fusion feature to obtain the initially recognized voice of the speaker.

The voice fusion feature is a voice feature obtained after the mixed voice feature and the registered voice feature of the registered voice are fused.

The terminal may perform feature extraction on the mixed voice to obtain the mixed voice feature of the mixed voice, and fuse the mixed voice feature and the registered voice feature of the registered voice to obtain the voice fusion feature. Further, the terminal may perform the initial recognition on the voice information of the speaker in the mixed voice based on the voice fusion feature to obtain the initially recognized voice of the speaker.

In all embodiments, the terminal may perform Fourier transform on the mixed voice to obtain a Fourier transform result, and perform the feature extraction on the mixed voice based on the Fourier transform result to obtain the mixed voice feature of the mixed voice.

In all embodiments, the terminal may perform feature splicing on the mixed voice feature and the registered voice feature of the registered voice, and use a spliced feature as the voice fusion feature.

In all embodiments, the terminal may map the mixed voice feature and the registered voice feature of the registered voice to the same dimension, and then perform weighted summation or a weighted averaging operation to obtain the voice fusion feature.

In the foregoing embodiment, the voice fusion feature including the mixed voice feature and the registered voice feature may be obtained by fusing the mixed voice feature and the registered voice feature of the registered voice, and then the initial recognition is performed on the voice information of the speaker in the mixed voice based on the voice fusion feature, so that extraction accuracy of the initially recognized voice may be improved.

In all embodiments, the mixed voice feature includes a mixed voice feature matrix, the voice fusion feature includes a voice fusion feature matrix, the registered voice feature includes a registered voice feature vector, and the fusing the mixed voice feature and the registered voice feature of the registered voice to obtain a voice fusion feature includes: repeating the registered voice feature vector in a time dimension to generate a registered voice feature matrix, a time dimension of the registered voice feature matrix is the same as a time dimension of the mixed voice feature matrix; and splicing the mixed voice feature matrix and the registered voice feature matrix to obtain the voice fusion feature matrix.

Matrix splicing connects two matrices along a row or a column, that is, along a horizontal direction or a vertical direction. For example, matrices A and B are both matrices of 3 rows and 3 columns, a matrix C of 3 rows and 6 columns is obtained by splicing along a row, and a matrix D of 6 rows and 3 columns is obtained by splicing along a column.

The time dimension is a dimension corresponding to a frame number of a voice signal in a time domain. The mixed voice feature matrix is a feature matrix corresponding to the mixed voice feature, and is a specific representation form of the mixed voice feature. The voice fusion feature matrix is a feature matrix corresponding to the voice fusion feature, and is a specific representation form of the voice fusion feature. The registered voice feature vector is a feature vector corresponding to the registered voice feature. The registered voice feature matrix is a feature matrix formed by the registered voice feature vector. In the embodiments of the present application, a time dimension is a dimension corresponding to the number of frames of a voice signal in a time domain, and each frame of the voice signal is usually converted into a corresponding vector, where the dimension of the vector depends on a feature extraction method. Common voice feature extraction methods include MFCC (Mel Frequency Cepstral Coefficient), PLP (Linear Predictive Coding), and so on. These methods usually generate a vector with a fixed length, the dimension of which depends on the parameter setting of feature extraction, for example, the MFCC usually generates a vector with 13 dimensions. Therefore, the dimension corresponding to each frame of the speech signal depends on the feature extraction method and parameter settings employed.

The terminal may obtain a length of the time dimension of the mixed voice feature matrix, and repeat the registered voice feature vector in the time dimension with the length of the time dimension of the mixed voice feature matrix as a constraint, to generate the registered voice feature matrix of which time dimension is the same as the time dimension of the mixed voice feature matrix. Further, the terminal may splice the mixed voice feature matrix and the registered voice feature matrix to obtain the voice fusion feature matrix. In the embodiment of the present application, the registered voice feature vector is repeated in the time dimension until the repeated generated registered voice feature matrix is the same as the time dimension of the hybrid voice feature matrix.

For example, taking a registered voice segment as an example, there are n voice frames in total, and a time dimension corresponding to the registered voice segment is n; Likewise, the mixed voice has N voice frames in total, and the time dimension is N. A registered voice segment formed by a plurality of continuous voice frames in a time dimension is used as a repeating unit, and the voice segment is repeatedly registered to obtain a voice segment whose time dimension is consistent with that of a mixed voice. That is, the registered voice segments are connected end to end to obtain a registered voice feature vector whose time dimension is N.

In the foregoing embodiment, the registered voice feature vector is repeated in the time dimension to generate the registered voice feature matrix of which time dimension is the same as the time dimension of the mixed voice feature matrix, so that the mixed voice feature matrix and the registered voice feature matrix may be spliced subsequently to obtain the voice fusion feature matrix and feature fusion accuracy is improved.

In all embodiments, the determining a mixed voice feature of the mixed voice includes: extracting an amplitude spectrum of the mixed voice to obtain a first amplitude spectrum; performing feature extraction on the first amplitude spectrum to obtain an amplitude spectrum feature; and performing feature extraction on the amplitude spectrum feature to obtain the mixed voice feature of the mixed voice. For extracting a magnitude spectrum of a mixed voice, a Fourier transform is usually used to convert the mixed voice signal from a time domain to a time domain, and for a mixed voice signal in a frequency domain, the magnitude spectrum and a phase spectrum are jointly characterized.

The first amplitude spectrum is an amplitude spectrum of the mixed voice. The amplitude spectrum feature is a feature of the first amplitude spectrum.

The terminal may perform the Fourier transform on the mixed voice in the time domain to obtain voice information of the mixed voice in a frequency domain. The terminal may obtain the first amplitude spectrum of the mixed voice based on the voice information of the mixed voice in the frequency domain. Further, the terminal may perform the feature extraction on the first amplitude spectrum to obtain the amplitude spectrum feature, and perform the feature extraction on the amplitude spectrum feature to obtain the mixed voice feature of the mixed voice.

In the foregoing embodiment, a mixed voice signal in the time domain is converted into a signal in the frequency domain by extracting the first amplitude spectrum of the mixed voice, the feature extraction is performed on the first amplitude spectrum to obtain the amplitude spectrum feature, and then the feature extraction is performed on the amplitude spectrum feature, so that the mixed voice feature of the mixed voice may be obtained, improving mixed voice feature accuracy.

The performing initial recognition on voice information of the speaker in the mixed voice based on the voice fusion feature to obtain the initially recognized voice of the speaker includes: performing initial recognition on the voice information of the speaker in the mixed voice based on the voice fusion feature to obtain a voice feature of the speaker; performing feature decoding on the voice feature of the speaker to obtain a second amplitude spectrum; and transforming the second amplitude spectrum based on a phase spectrum of the mixed voice to obtain the initially recognized voice of the speaker. The transform is to transform the second magnitude spectrum and the phase spectrum from the frequency domain to the time domain, and may be an inverse Fourier transform, an inverse short-time Fourier transform, or the like. If the inverse short-time Fourier transform is used, the frequency domain signal is restored to the time domain signal by performing the inverse Fourier transform of the window function in each time segment.

The voice feature of the speaker is a feature that reflects a sound characteristic of the speaker during speaking, and may be referred to as an object voice feature of the speaker. The second amplitude spectrum is an amplitude spectrum obtained after feature decoding is performed on the object voice feature.

The terminal may perform the initial recognition on the voice information of the speaker in the mixed voice based on the voice fusion feature to obtain the object voice feature of the speaker. Further, the terminal may perform the feature decoding on the object voice feature to obtain the second amplitude spectrum. The terminal may obtain the phase spectrum of the mixed voice, and transform the second amplitude spectrum based on the phase spectrum of the mixed voice to obtain the initially recognized voice of the speaker.

In all embodiments, the second amplitude spectrum is used for representing a voice signal in the frequency domain. The terminal may perform inverse Fourier transform on the second amplitude spectrum based on the phase spectrum of the mixed voice to obtain an initially recognized voice of a speaker in the time domain.

In all embodiments, the initially recognized voice is extracted by using a voice extraction network. As shown in FIG. 3, a voice extraction network includes a Fourier transform unit, an encoder, a long short-term memory unit, and an inverse Fourier transform unit. It may be understood that the terminal may extract a first amplitude spectrum of a mixed voice by using the Fourier transform unit in the voice extraction network. The terminal may perform feature extraction on the first amplitude spectrum by using the encoder in the voice extraction network to obtain an amplitude spectrum feature. The terminal may perform the feature extraction on the amplitude spectrum feature by using the long short-term memory unit in the voice extraction network to obtain a mixed voice feature of the mixed voice, perform initial recognition on voice information of a speaker in the mixed voice based on a voice fusion feature to obtain an object voice feature of the speaker, and perform feature decoding on the object voice feature to obtain a second amplitude spectrum. Further, the terminal may transform the second amplitude spectrum based on a phase spectrum of the mixed voice by using the inverse Fourier transform unit in the voice extraction network to obtain an initially recognized voice of the speaker.

In the foregoing embodiment, the object voice feature of the speaker may be obtained by performing the initial recognition on the voice information of the speaker in the mixed voice based on the voice fusion feature.

Further, the second amplitude spectrum may be obtained by performing the feature decoding on the object voice feature, and the second amplitude spectrum may be transformed based on the phase spectrum of the mixed voice to convert a signal in a frequency domain into a voice signal in a time domain and obtain the initially recognized voice of the speaker, improving extraction accuracy of the initially recognized voice.

In all embodiments, the determining a registered voice feature of the registered voice includes: extracting a frequency spectrum of the registered voice; generating a mel-frequency spectrum of the registered voice based on the frequency spectrum; and performing feature extraction on the mel-frequency spectrum to obtain the registered voice feature of the registered voice.

Specifically, the terminal may perform Fourier transform on the registered voice in the time domain to obtain voice information of the registered voice in the frequency domain. The terminal may obtain the frequency spectrum of the registered voice based on the voice information of the registered voice in the frequency domain. Further, the terminal may generate the mel-frequency spectrum of the registered voice based on the frequency spectrum of the registered voice, and perform the feature extraction on the mel-frequency spectrum to obtain the registered voice feature of the registered voice.

In all embodiments, the voice information includes voice segments, and the determining, based on the registered voice feature, a voice similarity between the registered voice and voice information included in the initially recognized voice includes: determining a segment voice feature corresponding to a voice segment for each voice segment in the initially recognized voice; and determining a voice similarity between the registered voice and the voice segment based on the segment voice feature and the registered voice feature.

The segment voice feature is a voice feature of the voice segment. The initially recognized voice includes a plurality of voice segments.

The terminal may perform the feature extraction on the voice segment for each voice segment in the initially recognized voice to obtain a segment voice feature of the voice segment, and determine a voice similarity between the registered voice and the voice segment based on the segment voice feature and the registered voice feature.

In all embodiments, the terminal may perform the feature extraction on the voice segment for each voice segment in the initially recognized voice to obtain a segment voice feature corresponding to the voice segment.

In all embodiments, the segment voice feature includes a segment voice feature vector, and the registered voice feature includes a registered voice feature vector. The terminal may determine a voice similarity between the registered voice and the voice segment based on the segment voice feature vector of each voice segment and the registered voice feature vector for each voice segment in the initially recognized voice.

In all embodiments, the voice similarity between the registered voice and the voice segment may be calculated by the following formula:

$$\cos\theta = \frac{A \cdot B}{|A| \times |B|}.$$

A represents the segment voice feature vector. B represents the registered voice feature vector. $\cos\theta$ represents the voice similarity between the registered voice and the voice segment. $\theta$ represents an included angle between the segment voice feature vector and the registered voice feature vector.

In the foregoing embodiment, calculation accuracy of the voice similarity between the registered voice and the voice information in the initially recognized voice may be improved by determining the voice similarity between the registered voice and the voice segment based on the segment voice feature and the registered voice feature.

In all embodiments, the determining a segment voice feature corresponding to a voice segment for each voice segment in the initially recognized voice includes: repeating the voice segment for each voice segment in the initially recognized voice to obtain a recombined voice having the same time length as the registered voice; the recombined voice including a plurality of voice segments; and determining the segment voice feature corresponding to the voice segment based on a recombined voice feature of the recombined voice.

In this embodiment, the voice information in the initially recognized voice includes voice segments, and the determining, based on the registered voice feature, a voice similarity between the registered voice and voice information included in the initially recognized voice includes: repeating each voice segment in the initially recognized voice based on a time length of the registered voice separately to obtain a recombined voice having the time length; obtaining a recombined voice feature extracted from the recombined voice, and determining a segment voice feature corresponding to each voice segment in the initially recognized voice based on the recombined voice feature; and determining a voice similarity between the registered voice and each voice segment based on the segment voice feature corresponding to each voice segment and the registered voice feature separately.

The recombined voice is a voice obtained by recombining a plurality of same voice segments, and it may be understood that the recombined voice includes the plurality of same voice segments.

The terminal may obtain the time length of the registered voice, and repeat the voice segment for each voice segment in the initially recognized voice based on the time length of the registered voice to obtain a recombined voice having the same time length as the registered voice. For each voice segment, the obtained recombined voice includes the plurality of same voice segments. The terminal may perform the feature extraction on the recombined voice to obtain the recombined voice feature of the recombined voice, and determine the segment voice feature corresponding to the voice segment based on the recombined voice feature of the recombined voice.

In all embodiments, the terminal may directly use the recombined voice feature of the recombined voice as the segment voice feature corresponding to the voice segment.

In the foregoing embodiment, the voice segment is repeated to obtain the recombined voice that has the same time length as the registered voice and that includes the plurality of same voice segments, and then the segment voice feature corresponding to the voice segment is determined based on the recombined voice feature of the recombined voice, so that the calculation accuracy of the voice similarity between the registered voice and the voice information in the initially recognized voice may be further improved.

In all embodiments, an operation of the determining, based on the registered voice feature, a voice similarity between the registered voice and voice information included in the initially recognized voice and an operation of the filtering out, from the initially recognized voice, voice information of which voice similarity is lower than a preset similarity, to obtain a clean voice of the speaker are performed in a first processing mode.

In all embodiments, the voice processing method further includes: obtaining an interference voice in a second processing mode, the interference voice is extracted from the mixed voice based on the registered voice feature; obtaining the mixed voice feature of the mixed voice, a voice feature of the initially recognized voice, and a voice feature of the interference voice; performing fusion on the mixed voice feature and the voice feature of the initially recognized voice based on an attention mechanism to obtain a first attention feature; performing fusion on the mixed voice feature and the voice feature of the interference voice based on an attention mechanism to obtain a second attention feature; and obtaining the clean voice of the speaker based on a fused feature obtained by fusing the mixed voice feature, the first attention feature, and the second attention feature. The fusion may be one or more operations of splicing, overlapping, or replacing the voice feature of the hybrid voice feature and the voice feature of the initial recognition voice.

In this embodiment, in the first processing mode, the terminal may perform steps of determining the voice similarity and filtering a subsequent corresponding voice. In the second processing mode, the terminal may extract the interference voice from the mixed voice based on the registered voice feature, and the interference voice is a voice that interferes with recognition of the voice information of the speaker in the mixed voice. Further, in the second processing mode, the terminal may perform fusion on the mixed voice feature of the mixed voice and the voice feature of the initially recognized voice based on the attention mechanism to obtain the first attention feature, perform fusion on the mixed voice feature and the voice feature of the interference voice based on the attention mechanism to obtain the second attention feature, and obtain the clean voice of the speaker based on a fused feature obtained by fusing the mixed voice feature, the first attention feature, and the second attention feature.

The first attention feature is a feature obtained by performing fusion on the mixed voice feature of the mixed voice and the voice feature of the initially recognized voice based on the attention mechanism. The second attention feature is a feature obtained by performing fusion on the mixed voice feature and the voice feature of the interference voice based on the attention mechanism. It may be understood that fusion is performed on the mixed voice feature of the mixed voice and the voice feature of the initially recognized voice based on the attention mechanism refers to that the mixed voice feature of the mixed voice and the voice feature of the initially recognized voice are respectively multiplied by a corresponding attention weight for fusion. It may be further understood that fusion is performed on the mixed voice feature and the voice feature of the interference voice based on the attention mechanism refers to that the mixed voice feature and the voice feature of the interference voice are respectively multiplied by a corresponding attention weight for fusion.

Whether a processing mode is the first processing mode or the second processing mode determines that manners to extract the clean voice of the speaker are different. The processing mode may be pre-configured or modified in real time, and may alternatively be freely selected by a user.

In a case that the user needs to obtain the clean voice quickly, the terminal may determine a current processing mode as the first processing mode in response to a first processing mode selection operation. In the first processing mode, the terminal may determine a voice similarity between the registered voice and the voice information in the initially recognized voice based on the registered voice feature, determine the voice information of which voice similarity is lower than the preset similarity from the initially recognized voice to obtain the to-be-filtered voice information, and filter the to-be-filtered voice information in the initially recognized voice to obtain the clean voice of the speaker.

In a case that the user needs to obtain the clean voice with high accuracy, the terminal may determine a current processing mode as the second processing mode in response to a second processing mode selection operation. In the second processing mode, the terminal may perform fusion on the mixed voice feature of the mixed voice and the voice feature of the initially recognized voice based on the attention mechanism to obtain the first attention feature, and perform fusion on the mixed voice feature and the voice feature of the interference voice based on the attention mechanism to obtain the second attention feature; and obtain the clean voice of the speaker based on a fused feature obtained by fusing the mixed voice feature, the first attention feature, and the second attention feature.

In all embodiments, the terminal may directly perform the feature fusion on the mixed voice feature, the first attention feature, and the second attention feature, to obtain the fused feature. Further, the terminal may determine the clean voice of the speaker based on the fused feature.

In all embodiments, the terminal may input the mixed voice and the registered voice feature into the pretrained voice extraction model to perform voice extraction based on the mixed voice and the registered voice feature by using the voice extraction model, and output the initially recognized voice and the interference voice.

In the foregoing embodiment, in the first processing mode, advanced voice filtering is performed on the initially recognized voice extracted from the mixed voice based on the voice similarity between the registered voice and the voice information in the initially recognized voice, to obtain a cleaner voice of the speaker. It may be understood that in the first processing mode, a clean voice may be quickly obtained, so that voice extraction efficiency is improved. In the second processing mode, fusion is performed on the mixed voice feature of the mixed voice and the voice feature of the initially recognized voice based on the attention mechanism, and fusion is performed on the mixed voice feature and the voice feature of the interference voice based on the attention mechanism to separately obtain the first attention feature and the second attention feature. Further, the clean voice of the speaker is determined based on the mixed voice feature, the first attention feature, and the second attention feature. It may be understood that compared with the first processing mode, in the second processing mode, a cleaner voice may be obtained, so that voice extraction accuracy is further improved. In this way, two processing modes are provided for the user to select, so that voice extraction flexibility may be improved.

In all embodiments, the obtaining the clean voice of the speaker based on a fused feature obtained by fusing the mixed voice feature, the first attention feature, and the second attention feature includes: fusing the mixed voice feature, the first attention feature, the second attention feature, and the registered voice feature, and obtaining the clean voice of the speaker based on the fused feature.

In this embodiment, the terminal may perform the feature fusion on the mixed voice feature, the first attention feature, the second attention feature, and the registered voice feature, to obtain the fused feature.

Further, the terminal may determine the clean voice of the speaker based on the fused feature.

In the foregoing embodiment, the mixed voice feature, the first attention feature, the second attention feature, and the registered voice feature are fused, so that the fused feature may be accurate, the clean voice of the speaker may be determined based on a more accurate fused feature, and the voice extraction accuracy may be further improved.

In all embodiments, the initially recognized voice and the interference voice are extracted from the mixed voice by using a trained voice extraction model, and the method further includes: inputting the mixed voice and the registered voice feature into the voice extraction model; generating first mask information and second mask information based on the mixed voice and the registered voice feature by using the voice extraction model; masking out interference information in the mixed voice based on the first mask information by using the voice extraction model to obtain the initially recognized voice of the speaker; and masking out the voice information of the speaker in the mixed voice based on the second mask information by using the voice extraction model to obtain the interference voice.

In this embodiment, the initially recognized voice and the interference voice are extracted from the mixed voice by using the pretrained voice extraction model. The method further includes: inputting the mixed voice and the registered voice feature into the voice extraction model to generate first mask information and second mask information based on the mixed voice and the registered voice feature by using the voice extraction model; masking out interference information in the mixed voice based on the first mask information to obtain the initially recognized voice of the speaker; and masking out the voice information of the speaker in the mixed voice based on the second mask information to obtain the interference voice.

The first mask information is information used for masking out the interference information in the mixed voice. The second mask information is information used for masking out the voice information of the speaker in the mixed voice.

The terminal may input the mixed voice and the registered voice feature into the pretrained voice extraction model to generate first mask information and second mask information corresponding to the inputted mixed voice and the inputted registered voice feature based on the mixed voice and the registered voice feature by using the voice extraction model.

Further, the terminal may mask out the interference information in the mixed voice based on the first mask information to generate the initially recognized voice of the speaker, and mask out the voice information of the speaker in the mixed voice based on the second mask information to generate the interference voice that interferes with the voice information of the speaker.

In all embodiments, the terminal may input the mixed voice and the registered voice feature into the voice extraction model to generate the first mask information and the second mask information corresponding to the mixed voice and the registered voice feature based on a trained model parameter by using the voice extraction model.

In all embodiments, the first mask information includes a first mask parameter. It may be understood that because the first mask information is used for masking out the interference information in the mixed voice, the first mask information includes the first mask parameter, to mask out the interference information in the mixed voice. Specifically, the terminal may multiply the first mask parameter with a mixed voice amplitude spectrum of the mixed voice to obtain an object voice amplitude spectrum corresponding to the voice information of the speaker, and generate the initially recognized voice of the speaker based on the object voice amplitude spectrum. The mixed voice amplitude spectrum is an amplitude spectrum of the mixed voice. The object voice amplitude spectrum is an amplitude spectrum of the voice information of the speaker.

In all embodiments, the second mask information includes a second mask parameter. It may be understood that because the second mask information is used for masking out the voice information of the speaker in the mixed voice, the second mask information includes the second mask parameter, to mask out the voice information of the speaker in the mixed voice. Specifically, the terminal may multiply the second mask parameter with the mixed voice amplitude spectrum of the mixed voice to obtain an interference amplitude spectrum corresponding to the interference information in the mixed voice, and generate, based on the interference amplitude spectrum, the interference voice that interferes with the voice information of the speaker. The interference amplitude spectrum is an amplitude spectrum of the interference information in the mixed voice.

In the foregoing embodiment, the first mask information and the second mask information corresponding to the mixed voice and the registered voice feature may be generated based on the mixed voice and the registered voice feature by using the voice extraction model, and then the interference information in the mixed voice may be masked out based on the first mask information to obtain the initially recognized voice of the speaker, so that extraction accuracy of the initially recognized voice is further improved. In addition, the voice information of the speaker in the mixed voice may be masked out based on the second mask information to obtain the interference voice, so that extraction accuracy of the interference voice is improved.

In all embodiments, pretrained model parameters in the voice extraction model include a first mask mapping parameter and a second mask mapping parameter, and the inputting the mixed voice and the registered voice feature into the voice extraction model to generate first mask information and second mask information based on the mixed voice and the registered voice feature by using the voice extraction model includes: inputting the mixed voice and the registered voice feature into the voice extraction model to map and generate corresponding first mask information based on the first mask mapping parameter, and to map and generate corresponding second mask information based on the second mask mapping parameter.

In this embodiment, the terminal may generate the first mask information based on the first mask mapping parameter of the voice extraction model, the mixed voice, and the registered voice feature. The terminal may generate the second mask information based on the second mask mapping parameter of the voice extraction model, the mixed voice, and the registered voice feature.

A mask mapping parameter is a related parameter that maps a voice feature to mask information. Mask information for masking out the interference information in the mixed voice, that is, the first mask information may be mapped and generated based on the first mask mapping parameter. Mask information for masking out the voice information of the speaker in the mixed voice, that is, the second mask information may be mapped and generated based on the second mask mapping parameter.

The terminal may input the mixed voice and the registered voice feature into the voice extraction model to map and generate the first mask information corresponding to the inputted mixed voice and the inputted registered voice feature based on the first mask mapping parameter in the voice extraction model, and to map and generate the second mask information corresponding to the inputted mixed voice and the inputted registered voice feature based on the second mask mapping parameter in the voice extraction model.

In the foregoing embodiment, because the first mask information and the second mask information are generated based on the mixed voice and registered voice feature that are inputted into the voice extraction model, and a pretrained first mask mapping parameter and a pretrained second mask mapping parameter in the voice extraction model, the first mask information and the second mask information may be dynamically changed with different inputs. In this way, accuracy of the first mask information and the second mask information may be improved, to further improve extraction accuracy of the initially recognized voice and the interference voice.

In all embodiments, the mixed voice feature of the mixed voice, the voice feature of the initially recognized voice, and the voice feature of the interference voice are extracted by a feature extraction layer after the mixed voice, the initially recognized voice, and the interference voice are separately inputted into the feature extraction layer in a secondary processing model.

In all embodiments, the first attention feature is obtained by a first attention unit in the secondary processing model that performs fusion on the mixed voice feature and the voice feature of the initially recognized voice based on an attention mechanism.

In all embodiments, the second attention feature is obtained by a second attention unit in the secondary processing model that performs fusion on the mixed voice feature and the voice feature of the interference voice based on an attention mechanism.

In the second processing mode, the terminal separately inputs, into the feature extraction layer in the secondary processing model for feature extraction, the initially recognized voice and the interference voice that are outputted by the primary voice extraction model as well as the mixed voice, to obtain the mixed voice feature of the mixed voice, the voice feature of the initially recognized voice, and the voice feature of the interference voice.

The terminal may input the voice feature of the initially recognized voice and the mixed voice feature into the first attention unit in the secondary processing model to perform fusion on the mixed voice feature of the mixed voice and the voice feature of the initially recognized voice based on the attention mechanism, to obtain the first attention feature.

The terminal may input the voice feature of the interference voice and the mixed voice feature into the second attention unit in the secondary processing model to perform fusion on the mixed voice feature of the mixed voice and the voice feature of the interference voice based on the attention mechanism, to obtain the second attention feature.

It may be understood that models configured to perform the voice extraction on the mixed voice include the primary voice extraction model and the secondary processing model. The primary voice extraction model is configured to extract the initially recognized voice and the interference voice from the mixed voice. The secondary processing model is configured to perform the advanced voice extraction on the mixed voice based on the initially recognized voice and the interference voice, to obtain the clean voice of the speaker.

In all embodiments, the secondary processing model includes the feature extraction layer, the first attention unit, and the second attention unit. In the second processing mode, the terminal may separately input, into the feature extraction layer in the secondary processing model, the initially recognized voice and the interference voice that are outputted by the primary voice extraction model as well as the mixed voice, to separately perform the feature extraction on the mixed voice, the initially recognized voice, and the interference voice by using the feature extraction layer to obtain the mixed voice feature of the mixed voice, the voice feature of the initially recognized voice, and the voice feature of the interference voice. The terminal may input the voice feature of the initially recognized voice and the mixed voice feature into the first attention unit in the secondary processing model to perform fusion on the mixed voice feature of the mixed voice and the voice feature of the initially recognized voice based on the attention mechanism by using the first attention unit, to obtain the first attention feature. The terminal may input the voice feature of the interference voice and the mixed voice feature into the second attention unit in the secondary processing model to perform fusion on the mixed voice feature of the mixed voice and the voice feature of the interference voice based on the attention mechanism by using the second attention unit, to obtain the second attention feature.

In the foregoing embodiment, the initially recognized voice and interference voice are extracted by the primary voice extraction model, and the advanced voice extraction is performed by the secondary processing model on the mixed voice based on the initially recognized voice and interference voice, so that voice extraction accuracy may be further improved.

In all embodiments, the initially recognized voice and the interference voice are extracted from the mixed voice by using a primary voice extraction model, the secondary processing model further includes a feature fusion layer and a secondary voice extraction model, and the obtaining the clean voice of the speaker based on a fused feature obtained by fusing the mixed voice feature, the first attention feature, and the second attention feature includes: inputting the mixed voice feature, the first attention feature, the second attention feature, and the registered voice feature into the feature fusion layer for fusion to obtain a voice fusion feature; and inputting the voice fusion feature into the secondary voice extraction model to obtain the clean voice of the speaker based on the voice fusion feature by using the secondary voice extraction model.

A voice extraction model that extracts the initially recognized voice and interference voice is the primary voice extraction model. The secondary processing model further includes the feature fusion layer and the secondary voice extraction model. The terminal may input the mixed voice feature, the first attention feature, the second attention feature, and the registered voice feature into the feature fusion layer for fusion to obtain a voice fusion feature; and input the voice fusion feature into the secondary voice extraction model to obtain the clean voice of the speaker based on the voice fusion feature by using the secondary voice extraction model.

The secondary processing model includes not only the feature extraction layer, the first attention unit, and the second attention unit, but also the feature fusion layer and the secondary voice extraction model. The terminal may input the mixed voice feature, the first attention feature, the second attention feature, and registered voice feature into the feature fusion layer in the secondary processing model, to obtain the voice fusion feature by fusing the mixed voice feature, the first attention feature, the second attention feature, and registered voice feature by using the feature fusion layer. Further, the terminal may input the voice fusion feature into the secondary voice extraction model in the secondary processing model to obtain the clean voice of the speaker based on the voice fusion feature by using the secondary voice extraction model.

In all embodiments, the terminal may input the voice fusion feature into the secondary voice extraction model in the secondary processing model, to obtain the clean voice of the speaker based on the extracted feature obtained by performing the feature extraction on the voice fusion feature by using the secondary voice extraction model.

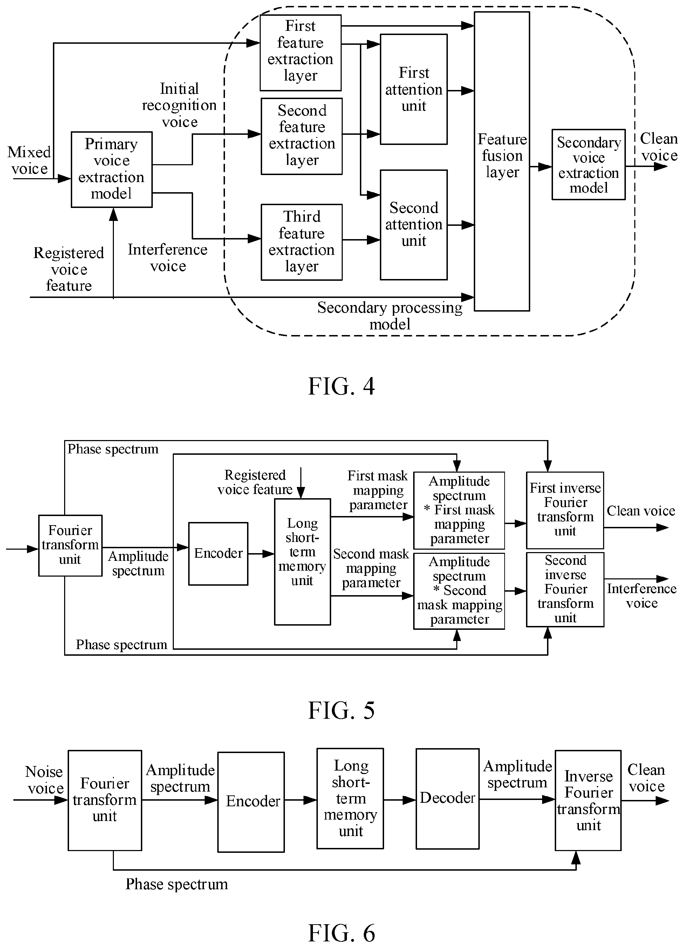

In all embodiments, as shown in FIG. 4, models configured to perform the voice extraction on the mixed voice include the primary voice extraction model and the secondary processing model. The secondary processing model includes a first feature extraction layer, a second feature extraction layer, a third feature extraction layer, the first attention unit, the second attention unit, the feature fusion layer, and the secondary voice extraction model. The terminal may input the mixed voice and the registered voice feature into the primary voice extraction model to obtain the initially recognized voice and the interference voice based on the mixed voice and the registered voice feature by using the voice extraction model.

Further, the terminal may separately inputs the mixed voice, the initially recognized voice, and the interference voice into the first feature extraction layer, the second feature extraction layer, and the third feature extraction layer in the secondary processing model, to separately perform the feature extraction on the mixed voice, the initially recognized voice, and the interference voice to obtain the mixed voice feature of the mixed voice, the voice feature of the initially recognized voice, and the voice feature of the interference voice.

The terminal may input the voice feature of the initially recognized voice and the mixed voice feature into the first attention unit in the secondary processing model to perform fusion on the mixed voice feature of the mixed voice and the voice feature of the initially recognized voice based on the attention mechanism by using the first attention unit, to obtain the first attention feature.

The terminal may input the voice feature of the interference voice and the mixed voice feature into the second attention unit in the secondary processing model to perform fusion on the mixed voice feature of the mixed voice and the voice feature of the interference voice based on the attention mechanism by using the second attention unit, to obtain the second attention feature.

The terminal may input the mixed voice feature, the first attention feature, the second attention feature, and registered voice feature into the feature fusion layer in the secondary processing model, to obtain the voice fusion feature by fusing the mixed voice feature, the first attention feature, the second attention feature, and registered voice feature by using the feature fusion layer. Further, the terminal may input the voice fusion feature into the secondary voice extraction model in the secondary processing model to obtain the clean voice of the speaker based on the voice fusion feature by using the secondary voice extraction model.

In all embodiments, as shown in FIG. 5, the foregoing primary voice extraction model includes a Fourier transform unit, an encoder, a long short-term memory unit, a first inverse Fourier transform unit, and a second inverse Fourier transform unit. It may be understood that the terminal may extract a mixed voice amplitude spectrum of a mixed voice by using the Fourier transform unit in the primary voice extraction model.

The terminal may perform feature extraction on the mixed voice amplitude spectrum by using the encoder in the primary voice extraction model to obtain an amplitude spectrum feature. The terminal may generate a first mask mapping parameter and a second mask mapping parameter based on the amplitude spectrum feature by using the long short-term memory unit in the primary voice extraction model.

The terminal may multiply the first mask mapping parameter with the mixed voice amplitude spectrum of the mixed voice to obtain an object voice amplitude spectrum corresponding to voice information of a speaker. The terminal may transform the object voice amplitude spectrum based on a phase spectrum of the mixed voice by using the first inverse Fourier transform unit in the primary voice extraction model to obtain an initially recognized voice of the speaker.

The terminal may multiply the second mask mapping parameter with the mixed voice amplitude spectrum of the mixed voice to obtain an interference amplitude spectrum corresponding to interference information in the mixed voice. The terminal may transform the interference amplitude spectrum based on the phase spectrum of the mixed voice by using the second inverse Fourier transform unit in the primary voice extraction model to obtain an interference voice.

In the foregoing embodiment, the mixed voice feature, the first attention feature, the second attention feature, and the registered voice feature are inputted into the feature fusion layer of the secondary processing model for fusion, so that a more accurate voice fusion feature may be obtained, the clean voice of the speaker may be determined based on the more accurate voice fusion feature by using the secondary voice extraction model, and voice extraction accuracy may be further improved.

In all embodiments, the obtaining a registered voice of a speaker, and obtaining a mixed voice includes: obtaining an initial mixed voice and an initial registered voice of the speaker, the initial mixed voice including voice information of the speaker; and denoising the initial mixed voice and the initial registered voice separately to obtain the mixed voice and the registered voice of the speaker.

The initial mixed voice is the mixed voice that is not denoised. The initial registered voice is the registered voice that is not denoised.

Specifically, the terminal may separately obtain the initial mixed voice and the initial registered voice of the speaker. The initial mixed voice includes the voice information of the speaker. It may be understood that the initial mixed voice and the initial registered voice include noise, for example, at least one of large reverberation, high background noise, and music noise. The terminal may denoise the initial mixed voice to obtain the mixed voice. The terminal may denoise the initial registered voice to obtain the registered voice of the speaker.

In all embodiments, the mixed voice and the registered voice are obtained by denoising by using a pretrained denoising network. Specifically, the terminal may separately input the obtained initial mixed voice and the initial registered voice of the speaker into the denoising network, to denoise the initial mixed voice and the initial registered voice by using the denoising network to obtain the mixed voice and the registered voice of the speaker.

In the foregoing embodiment, noise in the initial mixed voice and the initial registered voice may be removed by denoising the initial mixed voice and the initial registered voice separately, and a noise-free mixed voice and a noise-free registered voice may be obtained, so that the subsequent voice extraction is performed based on the noise-free mixed voice and the noise-free registered voice, and voice extraction accuracy may be further improved.

In all embodiments, the initially recognized voice is generated by using the pretrained voice processing model. The voice processing model includes the denoising network and the voice extraction network. The mixed voice and the registered voice are obtained by denoising by using the denoising network. The extracting an initially recognized voice of the speaker from the mixed voice based on the registered voice feature includes: inputting the registered voice feature of the registered voice into a voice extraction network to perform the initial recognition on the voice information of the speaker in the mixed voice by using the voice extraction network, to obtain the initially recognized voice of the speaker.

In this embodiment, the voice processing model includes the denoising network and the voice extraction network. The terminal may separately input the obtained initial mixed voice and the initial registered voice of the speaker into the denoising network, to denoise the initial mixed voice and the initial registered voice by using the denoising network to obtain the mixed voice and the registered voice of the speaker. Further, the terminal may input the mixed voice and the registered voice feature of the registered voice into a voice extraction network to perform the initial recognition on the voice information of the speaker in the mixed voice by using the voice extraction network, to obtain the initially recognized voice of the speaker.

In all embodiments, as shown in FIG. 6, a denoising network includes a Fourier transform unit, an encoder, a long short-term memory unit, a decoder, and an inverse Fourier transform unit. It may be understood that a noise voice includes an initial mixed voice and an initial registered voice. A clean voice includes a mixed voice and a registered voice. The terminal may input the noise voice into the denoising network to perform Fourier transform on the noise voice by using the Fourier transform unit in the denoising network to obtain an amplitude spectrum and a phase spectrum of the noise voice, then perform feature encoding on the amplitude spectrum of the noise voice by using the encoder in the denoising network to obtain an encoded feature, then perform feature extraction on the encoded feature by using the long short-term memory unit in the denoising network, decode the extracted feature by using the decoder in the denoising network to obtain a decoded amplitude spectrum, and perform inverse Fourier transform on the decoded amplitude spectrum by using the inverse Fourier transform unit in the denoising network to obtain the clean voice. The main task of the feature decoding is to decode the features output by the encoder and restore a meaningful feature representation to an original signal. A core of the feature decoding is to generate an original signal by using a feature output by an encoder.

In the foregoing embodiment, the initial mixed voice and the initial registered voice are denoised by using the denoising network in a voice processing model, so that the noise-free mixed voice and the noise-free registered voice may be obtained, improving a voice denoising effect. Further, initial recognition is performed on voice information of a speaker in the mixed voice by using a voice extraction network, so that extraction accuracy of the initially recognized voice may be improved.

In all embodiments, after the mixed voice and the registered voice are obtained, denoising is performed on the mixed voice and the registered voice by using a trained denoising network separately, and the voice processing method further includes: obtaining a sample noise voice, where the sample noise voice is obtained by adding noise to a reference clean voice used as a reference; inputting the sample noise voice into a to-be-trained denoising network, to denoise the sample noise voice by using the to-be-trained denoising network to obtain a prediction voice after denoising is performed; and iteratively training the to-be-trained denoising network based on a difference between the prediction voice and the reference clean voice to obtain the trained denoising network. The difference between the predicted voice and the reference clean voice may specifically be a difference of a voice itself, may be a difference of a voice signal, may be a difference of an energy value of a voice, and may also be a difference of probability distribution of occurrence probabilities of a voice at various frequencies in a frequency domain。

In this embodiment, the mixed voice and the registered voice are obtained by denoising by using a pretrained denoising network. The terminal may obtain the sample noise voice, and the sample noise voice is obtained by adding noise to the reference clean voice used as a reference. The terminal may input the sample noise voice into a to-be-trained denoising network, to denoise the sample noise voice by using the to-be-trained denoising network to obtain a prediction voice after denoising is performed. The terminal iteratively trains the to-be-trained denoising network based on a difference between the prediction voice and the reference clean voice to obtain the trained denoising network.

The sample noise voice is a voice that includes noise and is used for training the denoising network. The sample noise voice is obtained by adding noise to the reference clean voice used as a reference. The reference clean voice is a voice that does not include noise and plays a reference role during training the denoising network. The prediction voice is a voice obtained by prediction after denoising the sample noise voice during training the denoising network.

Specifically, the terminal may obtain the reference clean voice used as a reference, and add noise to the reference clean voice to obtain the sample noise voice. Further, the terminal may input the sample noise voice into a to-be-trained denoising network, to denoise the sample noise voice by using the to-be-trained denoising network to obtain a prediction voice after denoising is performed. The terminal may iteratively train the to-be-trained denoising network based on a difference between the prediction voice and the reference clean voice to obtain the pretrained denoising network.

In all embodiments, the terminal may determine a denoising loss value based on the difference between the prediction voice and the reference clean voice, and iteratively train the to-be-trained denoising network based on the denoising loss value, to obtain the pretrained denoising network in a case that iteration stops.

In all embodiments, the denoising loss value may be calculated by using the following loss function:

$$Loss_{SDR} = 10\log_{10}\frac{||\bar{X}||^2}{||\bar{X}-X||^2}.$$

$\bar{X}$ represents the reference clean voice, may be specifically the reference clean voice itself, may be a voice signal of the reference clean voice, may be an energy value of the reference clean voice, or may be probability distribution of an occurrence probability of the reference clean voice at each frequency in a frequency domain. X represents the prediction voice, and is the same type of $\bar{X}$, may be specifically the prediction voice itself, may be a voice signal of the prediction voice, may be an energy value of the prediction voice, or may be probability distribution of an occurrence probability of the prediction voice at each frequency in the frequency domain. $Loss_{SDR}$ represents the denoising loss value. $||\cdot||$ represents a norm function, and may be specifically an $L_2$ norm function.

In the foregoing embodiment, the to-be-trained denoising network is iteratively trained based on the difference between the prediction voice and the clean voice, so that a denoising capability of the denoising network may be improved.

In all embodiments, the initially recognized voice is extracted by using a pretrained voice extraction network. The method further includes: obtaining sample data, the sample data including a sample mixed voice and a sample registered voice feature of a sample speaker, and the sample mixed voice being obtained by adding noise to a sample clean voice of the sample speaker; and inputting the sample data into a to-be-trained voice extraction network to recognize sample voice information of the sample speaker in the sample mixed voice based on the sample registered voice feature by using the voice extraction network, to obtain a prediction clean voice of the sample speaker; and iteratively training the to-be-trained voice extraction network based on a difference between the prediction clean voice and the sample clean voice to obtain the pretrained voice extraction network.

The sample data is data used for training the voice extraction network. The sample mixed voice is a mixed voice used for training the voice extraction network. The sample speaker is a speaker involved during training the voice extraction network. The sample registered voice feature is a registered voice feature used for training the voice extraction network. The sample clean voice is a voice that only includes the voice information of the sample speaker and plays a reference role during training the voice extraction network. The prediction clean voice is a voice of the sample speaker extracted from the sample mixed voice during training the voice extraction network.

The terminal may obtain the sample clean voice of the sample speaker, and add noise to the sample clean voice of the sample speaker to obtain the sample mixed voice. The terminal may obtain the sample registered voice of the sample speaker, and perform feature extraction on the sample registered voice to obtain the sample registered voice feature of the sample speaker. Further, the terminal may use the sample mixed voice and the sample registered voice feature of the sample speaker together as the sample data. The terminal may input the sample data into a to-be-trained voice extraction network to recognize sample voice information of the sample speaker in the sample mixed voice based on the sample registered voice feature by using the voice extraction network, to obtain a prediction clean voice of the sample speakers, and iteratively train the to-be-trained voice extraction network based on a difference between the prediction clean voice and the sample clean voice to obtain the pretrained voice extraction network.

In all embodiments, the terminal may determine an extraction loss value based on the difference between the prediction clean voice and the sample clean voice, and iteratively train the to-be-trained voice extraction network based on the extraction loss value, to obtain the pretrained voice extraction network in a case that iteration stops.

In all embodiments, the extraction loss value may be calculated by using the following loss function:

$$Loss_{MAE} = \frac{1}{N} \sum_{i=1}^{N} (\overline{Y_i} - Y_i)^2 .$$

i represents an $i^{th}$ sample of N sample mixed voices. $\overline{Y_i}$ represents an $i^{th}$ sample mixed voice, may be specifically the $i^{th}$ sample mixed voice itself, may be a voice signal of the $i^{th}$ sample mixed voice, may be an energy value of the $i^{th}$ sample mixed voice, or may be probability distribution of an occurrence probability of the $i^{th}$ sample mixed voice at each frequency in the frequency domain. $Y_i$ represents the prediction clean voice, may be specifically the prediction clean voice itself, may be a voice signal of the prediction clean voice, may be an energy value of the prediction clean voice, or may be probability distribution of an occurrence probability of the prediction clean voice at each frequency in the frequency domain. $Loss_{MAE}$ represents the extraction loss value.

In the foregoing embodiment, the to-be-trained voice extraction network is iteratively trained based on a difference between the prediction sample clean voice and the sample clean voice, so that voice extraction accuracy of the voice extraction network may be improved.

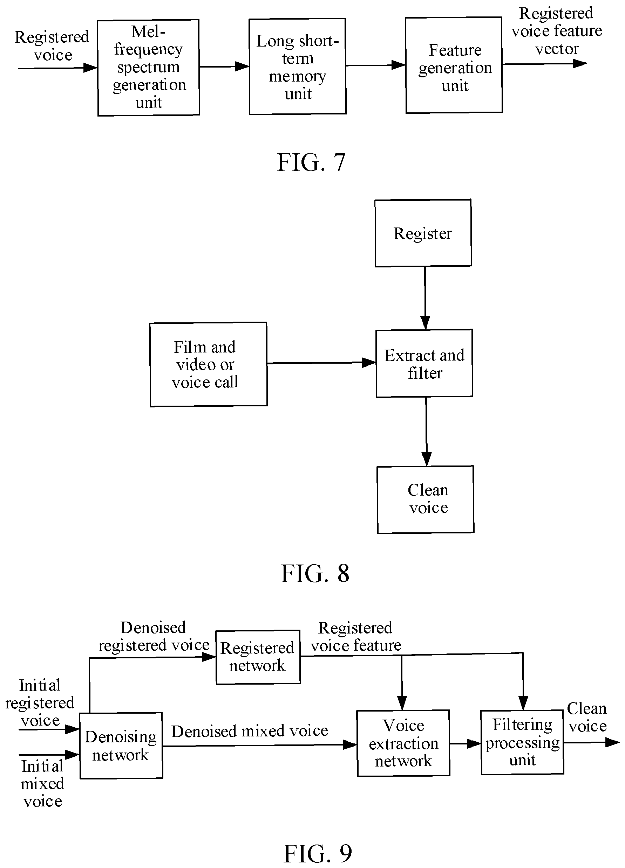

In all embodiments, the foregoing voice processing model further includes a registered network. The registered voice feature is extracted by the registered network. The registered network includes a mel-frequency spectrum generation unit, a long short-term memory unit, and a feature generation unit. As shown in FIG. 7, the terminal may extract a frequency spectrum of a registered voice by using the mel-frequency spectrum generation unit in the registered network, and generate a mel-frequency spectrum of the registered voice based on the frequency spectrum. The terminal may perform feature extraction on the mel-frequency spectrum by using the long short-term memory unit in the registered network to obtain a plurality of feature vectors. Further, the terminal may average the plurality of feature vectors in the time dimension by using the feature generation unit in the registered network to obtain a registered voice feature of the registered voice.

In the foregoing embodiment, the frequency spectrum of the registered voice is extracted to convert a registered voice signal in a time domain into a signal in a frequency domain. Further, the mel-frequency spectrum of the registered voice is generated based on the frequency spectrum, and feature extraction is performed on the mel-frequency spectrum, so that extraction accuracy of the registered voice feature may be improved.

In all embodiments, the obtaining a registered voice of a speaker, and obtaining a mixed voice includes: determining a speaker specified by a call triggering operation in response to the call triggering operation, and determining the registered voice of the speaker from a prestored candidate registered voice; and in a case that a voice call is established with a terminal corresponding to the speaker based on the call triggering operation, receiving the mixed voice transmitted by the terminal corresponding to the speaker in the voice call.

In this embodiment, the terminal determines the registered voice of the speaker from the prestored candidate registered voice in response to a call triggering operation for the speaker. In a case that a voice call is established with a terminal corresponding to the speaker based on the call triggering operation, the terminal receives the mixed voice transmitted by the terminal corresponding to the speaker in the voice call.

In a scenario of the voice call, a user may initiate a call request to the speaker based on the terminal. To be specific, the terminal may search for the registered voice of the speaker from the prestored candidate registered voice in response to a call triggering operation of the user for the speaker. In addition, the terminal may generate the call request for the speaker in response to the call triggering operation, and send the call request to the terminal corresponding to the speaker. In a case that the voice call is established with the terminal corresponding to the speaker based on the call request, the terminal may receive the mixed voice transmitted by the terminal corresponding to the speaker in the voice call.

It may be understood that during the voice call, the terminal may perform initial recognition on the voice information of the speaker in the received mixed voice based on the registered voice feature of the registered voice, to obtain the initially recognized voice of the speaker, determine a voice similarity between the registered voice and the voice information in the initially recognized voice based on the registered voice feature, determine the voice information of which voice similarity is lower than the preset similarity from the initially recognized voice to obtain the to-be-filtered voice information, and filter the to-be-filtered voice information in the initially recognized voice to obtain the clean voice of the speaker.

In the foregoing embodiment, the registered voice of the speaker may be determined from the prestored candidate registered voice in response to the call triggering operation for the speaker. In a case that the voice call is established with the terminal corresponding to the speaker based on the call triggering operation, the mixed voice transmitted by the terminal corresponding to the speaker in the voice call is received, so that a voice of the speaker may be extracted in the call scenario, and call quality is improved.

In all embodiments, the obtaining a registered voice of a speaker, and obtaining a mixed voice includes: obtaining a multimedia voice of a multimedia object, the multimedia voice being a mixed voice including voice information of a plurality of speakers; obtaining an identifier of a specified speaker in response to a specified operation for a speaker in the multimedia voice, the speaker being a speaker who is specified from the plurality of sounding objects and whose voice needs to be extracted; and obtaining a registered voice having a mapping relationship with the identifier of the speaker from a prestored registered voice for each speaker in the multimedia voice to obtain the registered voice of the speaker.

In this embodiment, the terminal may obtain the multimedia voice of the multimedia object. The multimedia voice is a mixed voice including voice information of the plurality of sounding objects. The terminal may obtain the identifier of the specified speaker in response to the specified operation for the speaker in the multimedia voice. The speaker is a sounding object who is specified from the plurality of sounding objects and whose voice needs to be extracted. The terminal may obtain the registered voice having the mapping relationship with the identifier of the speaker from the prestored registered voice for each sounding object in the multimedia voice to obtain the registered voice of the speaker. The plurality of sounding objects may be a plurality of speakers, and the specified speaker may be referred to as a target speaker.

The multimedia object is a multimedia file, and the multimedia object includes a video object and an audio object. The multimedia voice is a voice in the multimedia object. The identifier is a character string uniquely identifying the speaker.

The terminal may extract the multimedia voice from the multimedia object. It may be understood that the multimedia voice is the mixed voice including the voice information of the plurality of speakers. The terminal may obtain the identifier of the specified speaker in response to the specified operation for the speaker in the multimedia voice. It may be understood that the speaker is a speaker who is specified from the plurality of speakers and whose voice needs to be extracted. The terminal may search for the registered voice having the mapping relationship with the identifier from the prestored registered voice for each speaker in the multimedia voice as the registered voice of the specified speaker.

It may be understood that the terminal may extract the clean voice of the speaker from the multimedia voice. Specifically, the terminal may perform the initial recognition on the voice information of the speaker in the multimedia voice based on the registered voice feature of the registered voice of the speaker, to obtain the initially recognized voice of the speaker, determine a voice similarity between the registered voice and the voice information in the initially recognized voice based on the registered voice feature, determine the voice information of which voice similarity is lower than the preset similarity from the initially recognized voice to obtain the to-be-filtered voice information, and filter the to-be-filtered voice information in the initially recognized voice to obtain the clean voice of the speaker.

In the foregoing embodiment, the identifier of the specified speaker may be obtained by obtaining the multimedia voice of the multimedia object and in response to the specified operation for the speaker in the multimedia voice. Further, the registered voice having the mapping relationship with the identifier of the speaker may be obtained from the prestored registered voice for each speaker in the multimedia voice, so that the registered voice of the speaker is obtained, and the voice of the speaker interest to the user from multimedia objects may be extracted. The speaker to extract the clean voice may be quickly specified and the clean voice is extracted, avoiding consuming additional resources due to inability to hear clearly caused by a noisy multi-person voice environment.

In all embodiments, as shown in FIG. 8, the voice processing method of this application may be applied to a voice extraction scenario of a film and video or a voice call. Specifically, for a scenario applied to the film and video, the terminal may obtain a video voice of the film and video. The video voice is a mixed voice including voice information of a plurality of speakers. The terminal may obtain an identifier of a specified target speaker in response to a specified operation for the speaker in the video voice. The target speaker is a speaker who is specified from the plurality of speakers and whose voice needs to be extracted. The terminal may obtain a registered voice having a mapping relationship with the identifier from a prestored registered voice for each speaker in the video voice to obtain the registered voice of the target speaker. Therefore, according to the voice processing method of this application, the registered voice of the target speaker is extracted from the video voice based on the registered voice. For a scenario applied to the voice call, the terminal may determine the registered voice of the target speaker from the prestored candidate registered voice in response to a call triggering operation for the target speaker, and in a case that a voice call is established with a terminal corresponding to the target speaker based on the call triggering operation, receive the mixed voice transmitted by the terminal corresponding to the target speaker in the voice call. Therefore, according to the voice processing method of this application, the clean voice of the target speaker is extracted from the mixed voice obtained during the voice call based on the registered voice.

In all embodiments, the clean voice is generated by a voice processing model and a filtering processing unit. The voice processing model includes a denoising network, a registered network, and a voice extraction network. As shown in FIG. 9, the terminal may denoise an initial mixed voice and an initial registered voice separately by using the denoising network in the voice processing model to obtain a denoised mixed voice and a denoised registered voice. The terminal may perform special encoding on the denoised registered voice by using the registered network in the voice processing model to obtain a registered voice feature. The terminal may extract an initially recognized voice from the denoised mixed voice based on the registered voice feature by using the voice extraction network in the voice processing model. Further, the terminal reuses the filtering processing unit to filter the initially recognized voice based on the registered voice feature to obtain a clean voice of a speaker.

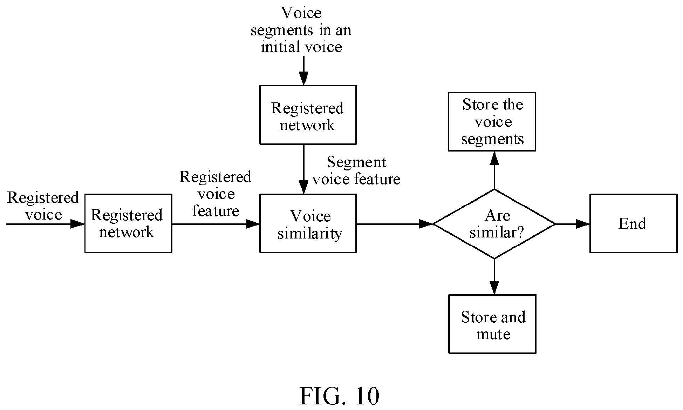

In all embodiments, as shown in FIG. 10, the terminal filters the initially recognized voice based on the registered voice feature by using the filtering processing unit to obtain the clean voice of the speaker. The specific implementation is as follows. The terminal may perform feature extraction on a voice segment for each voice segment in the initially recognized voice by using the registered network to obtain a segment voice feature of the voice segment. Further, the terminal may determine a voice similarity between the registered voice and the voice segment based on the segment voice feature and the registered voice feature. The terminal may store a voice segment of which similarity is higher than or equal to a preset voice similarity threshold, and mute a voice segment of which similarity is lower than the preset voice similarity threshold. Further, the terminal may generate the clean voice of the speaker based on the stored voice segment.

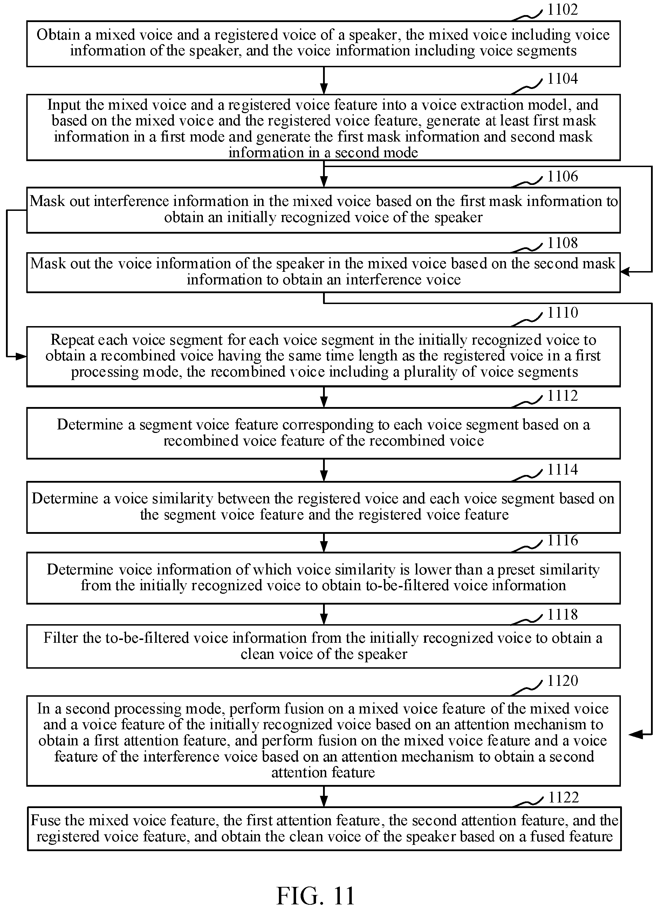

As shown in FIG. 11, a voice processing method is provided, and this embodiment is described by using an example in which the method is applied to the terminal 102 in FIG. 1. The method specifically includes the following steps.

Step 1102: Obtain a mixed voice and a registered voice of a speaker, the mixed voice including voice information of the speaker, and the voice information including voice segments.

Step 1104: Input the mixed voice and a registered voice feature into a voice extraction model, and based on the mixed voice and the registered voice feature, generate at least first mask information in a first mode and generate the first mask information and second mask information in a second mode. It may be understood that the first mask information and the second mask information may also be generated in the first mode.

Step 1106: Mask out interference information in the mixed voice based on the first mask information to obtain an initially recognized voice of the speaker.

Step 1108: Mask out the voice information of the speaker in the mixed voice based on the second mask information to obtain an interference voice.

Step 1110: Repeat each voice segment for each voice segment in the initially recognized voice to obtain a recombined voice having the same time length as the registered voice in a first processing mode, the recombined voice including a plurality of voice segments.

Step 1112: Determine a segment voice feature corresponding to each voice segment based on a recombined voice feature of the recombined voice.

Step 1114: Determine a voice similarity between the registered voice and each voice segment based on the segment voice feature and the registered voice feature.

Step 1116: Determine voice information of which voice similarity is lower than a preset similarity from the initially recognized voice to obtain to-be-filtered voice information.

Step 1118: Filter the to-be-filtered voice information from the initially recognized voice to obtain a clean voice of the speaker.

Step 1120: In a second processing mode, perform fusion on a mixed voice feature of the mixed voice and a voice feature of the initially recognized voice based on an attention mechanism to obtain a first attention feature, and perform fusion on the mixed voice feature and a voice feature of the interference voice based on an attention mechanism to obtain a second attention feature.

Step 1122: Fuse the mixed voice feature, the first attention feature, the second attention feature, and the registered voice feature, and obtain the clean voice of the speaker based on a fused feature.

This application further provides an application scenario. The foregoing voice processing method is applied to the application scenario. Specifically, the voice processing method may be applied to a voice extraction scenario of a film and video. It may be understood that the film and video includes a film and video voice (that is, a mixed voice). The film and video voice includes voice information of a plurality of actors (that is, speakers). Specifically, the terminal may obtain an initial film and video voice and an initial registered voice of a target actor. The initial film and video voice includes voice information of the target actor. The voice information includes voice segments. The mixed voice and a registered voice feature are inputted into a voice extraction model to generate first mask information and second mask information based on the mixed voice and the registered voice feature by using the voice extraction model. Interference information in the mixed voice is masked out based on the first mask information to obtain the initial film and video voice of the target actor. The voice information of the target actor in the mixed voice is masked out based on the second mask information to obtain the interference voice.

In a first processing mode, the terminal may repeat each voice segment for each voice segment in the initial film and video voice to obtain a recombined voice having the same time length as the registered voice. The recombined voice includes a plurality of voice segments. The segment voice feature corresponding to the voice segment is determined based on a recombined voice feature of the recombined voice. A voice similarity between the registered voice and the voice segment is determined based on the segment voice feature and the registered voice feature. Voice information of which voice similarity is lower than the preset similarity from the initial film and video voice is determined to obtain to-be-filtered voice information. The to-be-filtered voice information from the initial film and video voice is filtered to obtain a clean voice of the target actor.

In a second processing mode, the terminal may perform fusion on a mixed voice feature of the mixed voice and a voice feature of the initial film and video voice based on an attention mechanism to obtain a first attention feature, and perform fusion on the mixed voice feature and the voice feature of the interference voice based on an attention mechanism to obtain a second attention feature. The mixed voice feature, the first attention feature, the second attention feature, and the registered voice feature are fused, and the clean voice of the target actor is obtained based on a fused feature. According to the voice processing method of this application, a sound of the actor interest to a user may be accurately extracted, and extraction accuracy of an actor voice may be improved.

This application further provides another application scenario. The foregoing voice processing method is applied to the application scenario. Specifically, the voice processing method may be applied to a voice extraction scenario of a voice call. Specifically, a terminal may determine a registered voice of a target caller from a prestored candidate registered voice in response to a call triggering operation for the target caller (that is, the speaker). In a case that a voice call is established with the terminal corresponding to the target caller based on the call triggering operation, a call voice (a mixed voice) transmitted by the terminal corresponding to the target caller in the voice call is received. It may be understood that according to the voice processing method of this application, a sound of the target caller may be extracted from the call voice, to improve call quality.

In addition, this application further provides an application scenario. The foregoing voice processing method is applied to the application scenario. Specifically, the voice processing method may be applied to an obtaining scenario for training data before training a neural network model. Specifically, training the neural network model needs a large amount of training data. According to the voice processing method of this application, a clean voice of interest from a complex mixed voice may be extracted as the training data. According to the voice processing method of this application, a large amount of training data may be quickly obtained, so that labor costs are reduced compared with a conventional manual extraction method.

It is to be understood that, although the steps are displayed sequentially in the flowcharts of the embodiments, these steps are not necessarily performed sequentially according to the sequence. Unless otherwise explicitly specified in this application, execution of the steps is not strictly limited, and the steps may be performed in other sequences. Moreover, at least some of the steps in each embodiment may include a plurality of sub-steps or a plurality of stages. The sub-steps or stages are not necessarily performed at the same moment but may be performed at different moments. Execution of the sub-steps or stages is not necessarily sequentially performed, but may be performed alternately with other steps or at least some of sub-steps or stages of other steps.

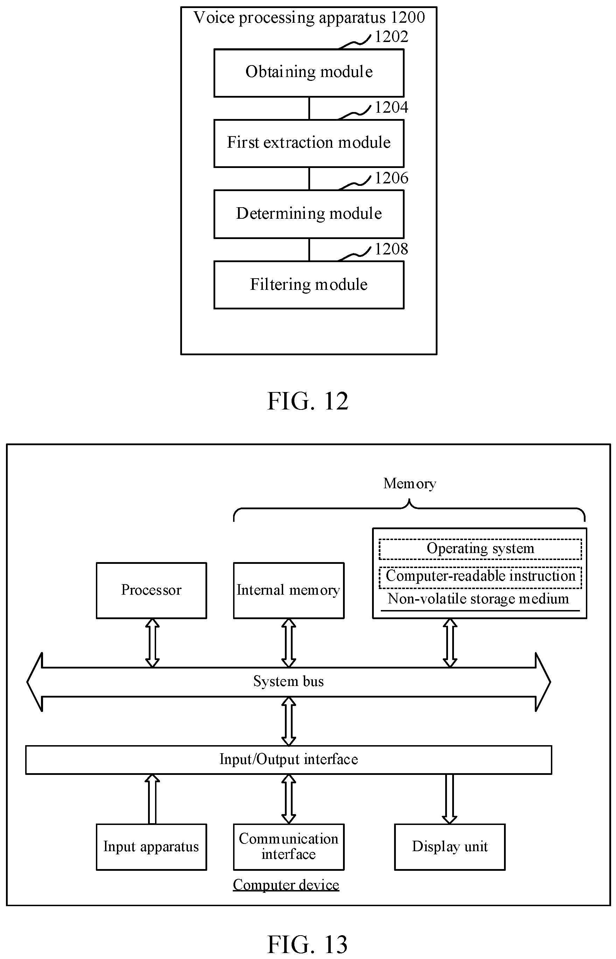

In all embodiments, as shown in FIG. 12, a voice processing apparatus 1200 is provided. The apparatus may use a software module or a hardware module, or a combination of the software module and the hardware module to become a part of a computer device. The apparatus specifically includes:

an obtaining module 1202, configured to obtain a registered voice of a speaker, and obtain a mixed voice, the mixed voice comprising voice data of a plurality of sounding objects, to which the speaker belongs;

a first extraction module 1204, configured to determine a registered voice feature of the registered voice, and extract an initially recognized voice of the speaker from the mixed voice based on the registered voice feature, the initially recognized voice comprising one or more voice data portions;

a determining module 1206, configured to determine, for each voice data portion comprised in the initially recognized voice, based on the registered voice feature, a voice similarity between the registered voice and the voice data portion; and

a filtering module 1208, configured to filter out, from the initially recognized voice, voice information of which voice similarity is lower than a preset similarity, to obtain a clean voice of the speaker.

The first extraction module 1204 is further configured to: determine a mixed voice feature of the mixed voice; fuse the mixed voice feature and the registered voice feature of the registered voice to obtain a voice fusion feature; and perform initial recognition on voice information of the speaker in the mixed voice based on the voice fusion feature to obtain the initially recognized voice of the speaker.

In all embodiments, the mixed voice feature includes a mixed voice feature matrix, and the voice fusion feature includes a voice fusion feature matrix. The first extraction module 1204 is further configured to: repeat the registered voice feature vector in a time dimension to generate a registered voice feature matrix, a time dimension of the registered voice feature matrix is the same as a time dimension of the mixed voice feature matrix; and splice the mixed voice feature matrix and the registered voice feature matrix to obtain the voice fusion feature matrix.

In all embodiments, the first extraction module 1204 is further configured to: extract an amplitude spectrum of the mixed voice to obtain a first amplitude spectrum; perform feature extraction on the first amplitude spectrum to obtain an amplitude spectrum feature; and perform feature extraction on the amplitude spectrum feature to obtain the mixed voice feature of the mixed voice.

In all embodiments, the first extraction module 1204 is further configured to: perform initial recognition on the voice information of the speaker in the mixed voice based on the voice fusion feature to obtain a voice feature of the speaker; perform feature decoding on the voice feature of the speaker to obtain a second amplitude spectrum; and transform the second amplitude spectrum based on a phase spectrum of the mixed voice to obtain the initially recognized voice of the speaker.

In all embodiments, the first extraction module 1204 is further configured to: extract a frequency spectrum of the registered voice; generate a mel-frequency spectrum of the registered voice based on the frequency spectrum; and perform feature extraction on the mel-frequency spectrum to obtain the registered voice feature of the registered voice.

In all embodiments, the voice information in the initially recognized voice includes voice segments, and the determining module 1206 is further configured to: repeat each voice segment in the initially recognized voice based on a time length of the registered voice separately to obtain a recombined voice having the time length; obtain a recombined voice feature extracted from the recombined voice, and determine a segment voice feature corresponding to each voice segment in the initially recognized voice based on the recombined voice feature; and determine a voice similarity between the registered voice and each voice segment based on the segment voice feature corresponding to each voice segment and the registered voice feature separately.

In all embodiments, after the mixed voice and the registered voice are obtained, denoising is performed on the mixed voice and the registered voice by using a trained denoising network separately. The apparatus 1200 further includes a denoising network training module, configured to: obtain a sample noise voice, the sample noise voice being obtained by adding noise to a reference clean voice used as a reference; input the sample noise voice into a to-be-trained denoising network, to denoise the sample noise voice by using the to-be-trained denoising network to obtain a prediction voice after denoising is performed; and iteratively train the to-be-trained denoising network based on a difference between the prediction voice and the reference clean voice to obtain the trained denoising network.

In all embodiments, the determining module 1206 is further configured to determine, based on the registered voice feature, a voice similarity between the registered voice and voice information included in the initially recognized voice in a first processing mode.

A filtering module 1208 is further configured to filter out, from the initially recognized voice, voice information of which voice similarity is lower than a preset similarity, to obtain a clean voice of the speaker in the first processing mode.

In all embodiments, the apparatus 1200 further includes a primary voice extraction model, configured to obtain an interference voice in a second processing mode, the interference voice being extracted from the mixed voice based on the registered voice feature.

In all embodiments, the apparatus 1200 further includes a secondary processing model, configured to: obtain the mixed voice feature of the mixed voice, a voice feature of the initially recognized voice, and a voice feature of the interference voice; perform fusion on the mixed voice feature and the voice feature of the initially recognized voice based on an attention mechanism to obtain a first attention feature; perform fusion on the mixed voice feature and the voice feature of the interference voice based on an attention mechanism to obtain a second attention feature; and obtain the clean voice of the speaker based on a fused feature obtained by fusing the mixed voice feature, the first attention feature, and the second attention feature.

In all embodiments, the secondary processing model is further configured to fuse the mixed voice feature, the first attention feature, the second attention feature, and the registered voice feature, and obtain the clean voice of the speaker based on a fused feature.

In all embodiments, the primary voice extraction model is further configured to: generate first mask information and second mask information based on the mixed voice and the registered voice feature after the mixed voice and the registered voice feature are inputted, mask out the interference information in the mixed voice based on the first mask information to obtain the initially recognized voice of the speaker, and mask out the voice information of the speaker in the mixed voice based on the second mask information to obtain the interference voice.

In all embodiments, trained model parameters in the primary voice extraction model include a first mask mapping parameter and a second mask mapping parameter. The primary voice extraction model is further configured to: generate first mask information based on the first mask mapping parameter of the voice extraction model, the mixed voice, and the registered voice feature; and generate second mask information based on the second mask mapping parameter of the voice extraction model, the mixed voice, and the registered voice feature.

In all embodiments, the mixed voice feature of the mixed voice, the voice feature of the initially recognized voice, and the voice feature of the interference voice are extracted by a feature extraction layer after the mixed voice, the initially recognized voice, and the interference voice are separately inputted into the feature extraction layer in a secondary processing model.

The first attention feature is obtained by a first attention unit in the secondary processing model that performs fusion on the mixed voice feature and the voice feature of the initially recognized voice based on an attention mechanism.

The second attention feature is obtained by a second attention unit in the secondary processing model that performs fusion on the mixed voice feature and the voice feature of the interference voice based on an attention mechanism.

In all embodiments, the secondary processing model further includes a feature fusion layer and a secondary voice extraction model. The secondary processing model is configured to: input the mixed voice feature, the first attention feature, the second attention feature, and the registered voice feature into the feature fusion layer for fusion to obtain a voice fusion feature; and input the voice fusion feature into the secondary voice extraction model to obtain the clean voice of the speaker based on the voice fusion feature by using the secondary voice extraction model.

In all embodiments, the obtaining module 1202 is further configured to: determine a speaker specified by a call triggering operation in response to the call triggering operation, and determine the registered voice of the speaker from a prestored candidate registered voice; and in a case that a voice call is established with a terminal corresponding to the speaker based on the call triggering operation, receive the mixed voice transmitted by the terminal corresponding to the speaker in the voice call.

In all embodiments, the obtaining module 1202 is further configured to: obtain a multimedia voice of a multimedia object, the multimedia voice being a mixed voice including voice information of a plurality of speakers; obtain an identifier of a specified speaker in response to a specified operation for a speaker in the multimedia voice, the speaker being a speaker who is specified from the plurality of sounding objects and whose voice needs to be extracted; and obtain a registered voice having a mapping relationship with the identifier of the speaker from a prestored registered voice for each speaker in the multimedia voice to obtain the registered voice of the speaker.

In the foregoing voice processing apparatus 1200, the mixed voice and the registered voice of the speaker are obtained, and the mixed voice includes the voice information of the speaker. The initially recognized voice of the speaker may be initially extracted from the mixed voice based on the registered voice feature of the registered voice, so that the initially recognized voice of the speaker may be extracted preliminarily and accurately. Further, advanced filtering processing is performed based on the initially recognized voice. To be specific, the voice similarity between the registered voice and the voice information in the initially recognized voice is determined based on the registered voice feature, and the voice information of which voice similarity is lower than the preset similarity is filtered out from the initially recognized voice, so that the retained noise in the initially recognized voice may be filtered out, to obtain a cleaner voice of the speaker and improve voice extraction accuracy.

All or some of modules in the foregoing voice processing apparatus 1200 may be implemented by software, hardware, and a combination thereof. The modules may be embedded in or independent of a processor in a computer device in a form of hardware, and may alternatively be stored in a memory in the computer device in a form of software, so that the processor may call and perform operations corresponding to each module.

In all embodiments, a computer device is provided. The computer device may be a terminal, and an internal structure diagram of the computer device may be shown in FIG. 13. The computer device includes a processor, a memory, an input/output interface, a communication interface, a display unit, and an input apparatus. The processor and the memory are connected to the input/output interface via a system bus. The communication interface, the display unit, and the input apparatus are connected to the system bus via the input/output interface. The processor of the computer device is configured to provide a computation and control capability. The memory of the computer device includes a non-volatile storage medium and an internal memory. The non-volatile storage medium stores an operating system and computer-readable instructions. The internal memory provides an environment for running of the operating system and the computer-readable instructions in the non-volatile storage medium. The input/output interface of the computer device is configured to exchange information between the processor and an external device. The communication interface of the computer device is configured to communicate with an external terminal in a wired or wireless manner. A wireless manner may be implemented by Wi-Fi, a mobile cellular network, near field communication (NFC), or another technology. The computer-readable instructions, when executed by the processor, implement a voice processing method. The display unit of the computer device is configured to form a visually visible picture, and may be a display, a projection apparatus, or a virtual reality imaging apparatus. The display may be a liquid crystal display or an e-ink display. An input apparatus of the computer device may be a touch layer covering the display, may be a button, a trackball, or a touchpad disposed on a housing of the computer device, or may be an external keyboard, touchpad, mouse, or the like.

A person skilled in the art may understand that the structure shown in FIG. 13 is only a block diagram of a partial structure related to a solution in this application, and does not constitute a limitation to the computer device to which the solution in this application is applied. Specifically, the computer device may include more components or fewer components than those shown in the figure, or some components may be combined, or a different component deployment may be used.

In all embodiments, a computer device is further provided, and includes a memory and a processor. The memory has computer-readable instructions stored therein. The computer-readable instructions, when executed by the processor, implement an operation in each method embodiment.

In all embodiments, a computer-readable storage medium is further provided, and has computer-readable instructions stored thereon. The computer-readable instructions, when executed by a processor, implement an operation in each method embodiment.

In all embodiments, a computer-readable instruction product is further provided, and includes computer-readable instructions. The computer-readable instructions, when executed by a processor, implement operations in each method embodiment.

User information (including but not limited to user device information, user personal information, and the like) and data (including but not limited to data used for analysis, stored data, displayed data, and the like), included in this application are information and data that all authorized by a user or fully authorized by all parties. Collection, use, and processing of related data need to comply with relevant laws, regulations, and standards of relevant countries and regions.

A person of ordinary skill in the art understands that all or some of procedures of the method in the foregoing embodiments may be implemented by computer-readable instructions instructing relevant hardware. The computer-readable instructions may be stored in a non-volatile computer-readable storage medium. When the computer-readable instructions are executed, the procedures of the foregoing method embodiments may be implemented. References to the memory, the storage, the database, or another medium used in the embodiments provided in this application may all include at least one of a non-volatile or a volatile memory. The non-volatile memory may include a read-only memory (ROM), a magnetic tape, a floppy disk, a flash memory, an optical memory, or the like. The volatile memory may include a random access memory (RAM), or an external cache. As a description and not a limitation, the RAM may be in various forms, such as a static random access memory (SRAM) or a dynamic random access memory (DRAM).

Technical features of the foregoing embodiments may be randomly combined. To make description concise, not all possible combinations of the technical features in the foregoing embodiments are described. However, the combinations of these technical features may fall within the scope defined by the appended claims.

The foregoing embodiments only describe several implementations of this application specifically and in detail, but cannot be construed as a limitation to the patent scope of this application, which shall be subject to the appended claims.

## Claims

1. A voice processing method, comprising:

   obtaining a registered voice of a speaker, and obtaining a mixed voice, the mixed voice comprising voice data of a plurality of sounding objects, to which the speaker belongs (202); determining a registered voice feature of the registered voice (204); extracting an initially recognized voice of the speaker from the mixed voice based on the registered voice feature (206), the initially recognized voice comprising one or more voice data portions; determining, for each voice data portion comprised in the initially recognized voice, based on the registered voice feature, a voice similarity between the registered voice and the voice data portion (208); and filtering out, from the initially recognized voice, voice information of which voice similarity is lower than a preset similarity, to obtain a clean voice of the speaker (210).

2. The method according to claim 1, wherein the extracting an initially recognized voice of the speaker from the mixed voice based on the registered voice feature comprises:

determining a mixed voice feature of the mixed voice; fusing the mixed voice feature and the registered voice feature of the registered voice to obtain a voice fusion feature; and performing initial recognition on voice information of the speaker in the mixed voice based on the voice fusion feature to obtain the initially recognized voice of the speaker.

3. The method according to claim 2, wherein the mixed voice feature comprises a mixed voice feature matrix, the voice fusion feature comprises a voice fusion feature matrix, the registered voice feature comprises a registered voice feature vector, and the fusing the mixed voice feature and the registered voice feature of the registered voice to obtain a voice fusion feature comprises:

repeating the registered voice feature vector in a time dimension to generate a registered voice feature matrix, a time dimension of the registered voice feature matrix is the same as a time dimension of the mixed voice feature matrix; and splicing the mixed voice feature matrix and the registered voice feature matrix to obtain the voice fusion feature matrix.

4. The method according to claim 2 or 3, wherein the determining a mixed voice feature of the mixed voice; comprises:

extracting an amplitude spectrum of the mixed voice to obtain a first amplitude spectrum; performing feature extraction on the first amplitude spectrum to obtain an amplitude spectrum feature; and performing feature extraction on the amplitude spectrum feature to obtain the mixed voice feature of the mixed voice.

5. The method according to claim 2, wherein the performing initial recognition on voice information of the speaker in the mixed voice based on the voice fusion feature to obtain the initially recognized voice of the speaker comprises:

performing initial recognition on the voice information of the speaker in the mixed voice based on the voice fusion feature to obtain a voice feature of the speaker; performing feature decoding on the voice feature of the speaker to obtain a second amplitude spectrum; and transforming the second amplitude spectrum based on a phase spectrum of the mixed voice to obtain the initially recognized voice of the speaker.

6. The method according to any one of claims 1 to 5, wherein the determining a registered voice feature of the registered voice comprises:

extracting a frequency spectrum of the registered voice; generating a mel-frequency spectrum of the registered voice based on the frequency spectrum; and performing feature extraction on the mel-frequency spectrum to obtain the registered voice feature of the registered voice.

7. The method according to any one of claims 1 to 6, wherein the voice information of the initially recognized voice comprises voice segments, and the determining, for each voice data portion comprised in the initially recognized voice, based on the registered voice feature, a voice similarity between the registered voice and the voice data portion, comprises:

repeating each voice segment in the initially recognized voice based on a time length of the registered voice separately to obtain a recombined voice having the time length; obtaining a recombined voice feature extracted from the recombined voice, and determining a segment voice feature corresponding to each voice segment in the initially recognized voice based on the recombined voice feature; and determining a voice similarity between the registered voice and each voice segment based on the segment voice feature corresponding to each voice segment and the registered voice feature separately.

8. The method according to any one of claims 1 to 7, wherein after the mixed voice and the registered voice are obtained, denoising is performed on the mixed voice and the registered voice by using a trained denoising network separately, and the method further comprises:

obtaining a sample noise voice, wherein the sample noise voice is obtained by adding noise to a reference clean voice used as a reference; inputting the sample noise voice into a to-be-trained denoising network, to denoise the sample noise voice by using the to-be-trained denoising network to obtain a prediction voice after denoising is performed; and iteratively training the to-be-trained denoising network based on a difference between the prediction voice and the reference clean voice to obtain the trained denoising network.

9. The method according to any one of claims 1 to 8, wherein an operation of the determining, , for each voice data portion comprised in the initially recognized voice, based on the registered voice feature, a voice similarity between the registered voice and the voice data portion and an operation of the filtering out, from the initially recognized voice, voice information of which voice similarity is lower than a preset similarity, to obtain a clean voice of the speaker are performed in a first processing mode, and the method further comprises:

obtaining an interference voice in a second processing mode, the interference voice is extracted from the mixed voice based on the registered voice feature; obtaining the mixed voice feature of the mixed voice, a voice feature of the initially recognized voice, and a voice feature of the interference voice; performing fusion on the mixed voice feature and the voice feature of the initially recognized voice based on an attention mechanism to obtain a first attention feature; performing fusion on the mixed voice feature and the voice feature of the interference voice based on an attention mechanism to obtain a second attention feature; and obtaining the clean voice of the speaker based on a fused feature obtained by fusing the mixed voice feature, the first attention feature, and the second attention feature.

10. The method according to claim 9, wherein the obtaining the clean voice of the speaker based on a fused feature obtained by fusing the mixed voice feature, the first attention feature, and the second attention feature comprises:

fusing the mixed voice feature, the first attention feature, the second attention feature, and the registered voice feature, and obtaining the clean voice of the speaker based on the fused feature; wherein, preferably, the initially recognized voice and the interference voice are extracted from the mixed voice by using a trained voice extraction model, and the method further comprises:

inputting the mixed voice and the registered voice feature into the voice extraction model; generating first mask information and second mask information based on the mixed voice and the registered voice feature by using the voice extraction model; masking out interference information in the mixed voice based on the first mask information by using the voice extraction model to obtain the initially recognized voice of the speaker; and masking out the voice information of the speaker in the mixed voice based on the second mask information by using the voice extraction model to obtain the interference voice; wherein, preferably, trained model parameters in the voice extraction model comprise a first mask mapping parameter and a second mask mapping parameter, and the generating first mask information and second mask information based on the mixed voice and the registered voice feature by using the voice extraction model comprises:

generating the first mask information based on the first mask mapping parameter of the voice extraction model, the mixed voice, and the registered voice feature; and generating the second mask information based on the second mask mapping parameter of the voice extraction model, the mixed voice, and the registered voice feature.

11. The method according to any one of claims 10, wherein the mixed voice feature of the mixed voice, the voice feature of the initially recognized voice, and the voice feature of the interference voice are extracted by a feature extraction layer after the mixed voice, the initially recognized voice, and the interference voice are separately inputted into the feature extraction layer in a secondary processing model;

the first attention feature is obtained by a first attention unit in the secondary processing model that performs fusion on the mixed voice feature and the voice feature of the initially recognized voice based on an attention mechanism; and

the second attention feature is obtained by a second attention unit in the secondary processing model that performs fusion on the mixed voice feature and the voice feature of the interference voice based on an attention mechanism;

wherein, preferably, the initially recognized voice and the interference voice are extracted from the mixed voice by using a primary voice extraction model, the secondary processing model further comprises a feature fusion layer and a secondary voice extraction model, and the obtaining the clean voice of the speaker based on a fused feature obtained by fusing the mixed voice feature, the first attention feature, and the second attention feature comprises:

inputting the mixed voice feature, the first attention feature, the second attention feature, and the registered voice feature into the feature fusion layer for fusion to obtain a voice fusion feature; and

inputting the voice fusion feature into the secondary voice extraction model to obtain the clean voice of the speaker based on the voice fusion feature by using the secondary voice extraction model.

12. The method according to any one of claims 1 to 11, wherein the obtaining a registered voice of a speaker, and obtaining a mixed voice comprises:

determining a speaker specified by a call triggering operation in response to the call triggering operation, and determining the registered voice of the speaker from a prestored candidate registered voice;

in a case that a voice call is established with a terminal corresponding to the speaker based on the call triggering operation, receiving the mixed voice transmitted by the terminal corresponding to the speaker in the voice call.

13. The method according to any one of claims 1 to 11 wherein the obtaining a registered voice of a speaker, and obtaining a mixed voice comprises:

obtaining a multimedia voice of a multimedia object, the multimedia voice being a mixed voice comprising voice information of a plurality of speakers;

obtaining an identifier of a specified speaker in response to a specified operation for a speaker in the multimedia voice, the speaker being a speaker who is specified from the plurality of sounding objects and whose voice needs to be extracted; and

obtaining a registered voice having a mapping relationship with the identifier of the speaker from a prestored registered voice for each speaker in the multimedia voice to obtain the registered voice of the speaker.

14. A voice processing apparatus, comprising:

an obtaining module (1202), configured to obtain a registered voice of a speaker, and obtain a mixed voice, the mixed voice comprising voice data of a plurality of sounding objects, to which the speaker belongs;

a first extraction module (1204), configured to determine a registered voice feature of the registered voice, and extract an initially recognized voice of the speaker from the mixed voice based on the registered voice feature, the initially recognized voice comprising one or more voice data portions;

a determining module (1206), configured to determine, for each voice data portion comprised in the initially recognized voice, based on the registered voice feature, a voice similarity between the registered voice and the voice data portion; and

a filtering module (1208), configured to filter out, from the initially recognized voice, voice information of which voice similarity is lower than a preset similarity, to obtain a clean voice of the speaker.

15. A computer device, comprising a memory and a processor, the memory having computer-readable instructions stored therein, and the computer-readable instructions, when executed by the processor, performing the method according to any one of claims 1 to 13.

**Patentansprüche**

1. Ein Sprachverarbeitungsverfahren, umfassend:

Erhalten einer registrierten Stimme eines Sprechers, und Erhalten einer Mischstimme, wobei die Mischstimme Sprachdaten einer Mehrzahl klingender Objekte umfasst, zu denen der Sprecher gehört (202);

Bestimmen eines registrierten Stimmerkennungsmerkmals der registrierten Stimme (204);

Extrahieren einer zunächst erkannten Stimme des Sprechers aus der Mischstimme basierend auf dem registrierten Stimmerkennungsmerkmal (206), wobei die zunächst erkannte Stimme einen oder mehrere Sprachdatenabschnitte umfasst;

Bestimmen, für jeden in der zunächst erkannten Stimme umfassenden Sprachdatenabschnitt, basierend auf dem registrierten Stimmerkennungsmerkmal, einer Sprachähnlichkeit zwischen der registrierten Stimme und dem Sprachdatenabschnitt (208); und

Herausfiltern aus der zunächst erkannten Stimme von Sprachinformationen, deren Sprachähnlichkeit geringer ist als eine voreingestellte Ähnlichkeit, um eine saubere Stimme des Sprechers zu erhalten (210).

2. Das Verfahren nach Anspruch 1, wobei das Extrahieren einer zunächst erkannten Stimme des Sprechers aus der Mischstimme basierend auf dem registrierten Stimmerkennungsmerkmal umfasst:

Bestimmen eines Mischstimmenmerkmals der Mischstimme;

Fusionieren des Mischstimmenmerkmals und des registrierten Stimmerkennungsmerkmals der registrierten Stimme, um ein Stimmenfusionsmerkmal zu erhalten; und

Durchführen einer anfänglichen Erkennung von Sprachinformationen des Sprechers in der Mischstimme basierend auf dem Stimmenfusionsmerkmal, um die zunächst erkannte Stimme des Sprechers zu erhalten.

3. Das Verfahren nach Anspruch 2, wobei das Mischstimmenmerkmal eine Mischstimmen-Merkmalsmatrix umfasst, das Stimmenfusionsmerkmal eine Stimmenfusions-Merkmalsmatrix umfasst, das registrierte Stimmerkennungsmerkmal einen registrierten Stimmerkennungs-Merkmalsvektor umfasst, und wobei das Fusionieren des Mischstimmenmerkmals und des registrierten Stimmerkennungsmerkmals der registrierten Stimme, um ein Stimmenfusionsmerkmal zu erhalten, umfasst:

Wiederholen des registrierten Stimmerkennungs-Merkmalsvektors in einer Zeitdimension, um eine registrierte Stimmerkennungs-Merkmalsmatrix zu erzeugen, wobei eine Zeitdimension der registrierten Stimmerkennungs-Merkmalsmatrix dieselbe ist wie eine Zeitdimension der Mischstimmen-Merkmalsmatrix; und

Verbinden der Mischstimmen-Merkmalsmatrix und der registrierten Stimmerkennungs-Merkmalsmatrix, um die Stimmenfusions-Merkmalsmatrix zu erhalten.

4. Das Verfahren nach Anspruch 2 oder 3, wobei das Bestimmen eines Mischstimmenmerkmals der Mischstimme umfasst:

Extrahieren eines Amplitudenspektrums der Mischstimme, um ein erstes Amplitudenspektrum zu erhalten;

Durchführen einer Merkmalsextraktion an dem ersten Amplitudenspektrum, um ein Amplitudenspektrummerkmal zu erhalten; und

Durchführen einer Merkmalsextraktion an dem Amplitudenspektrummerkmal, um das Mischstimmenmerkmal der Mischstimme zu erhalten.

5. Das Verfahren nach Anspruch 2, wobei das Durchführen einer anfänglichen Erkennung der Sprachinformationen des Sprechers in der Mischstimme basierend auf dem Stimmenfusionsmerkmal, um die zunächst erkannte Stimme des Sprechers zu erhalten, umfasst:

Durchführen einer anfänglichen Erkennung der Sprachinformationen des Sprechers in der Mischstimme basierend auf dem Stimmenfusionsmerkmal, um ein Stimmmerkmal des Sprechers zu erhalten;

Durchführen einer Merkmalsdekodierung des Stimmmerkmals des Sprechers, um ein zweites Amplitudenspektrum zu erhalten; und

Transformieren des zweiten Amplitudenspektrums basierend auf einem Phasenspektrum der Mischstimme, um die zunächst erkannte Stimme des Sprechers zu erhalten.

6. Das Verfahren nach einem der Ansprüche 1 bis 5, wobei das Bestimmen eines registrierten Stimmerkennungsmerkmals der registrierten Stimme umfasst:

Extrahieren eines Frequenzspektrums der registrierten Stimme;

Erzeugen eines Mel-Frequenzspektrums der registrierten Stimme basierend auf dem Frequenzspektrum; und

Durchführen einer Merkmalsextraktion an dem Mel-Frequenzspektrum, um das registrierte Stimmerkennungsmerkmal der registrierten Stimme zu erhalten.

7. Das Verfahren nach einem der Ansprüche 1 bis 6, wobei die Sprachinformationen der zunächst erkannten Stimme Sprachsegmente umfassen, und wobei das Bestimmen, für jeden in der zunächst erkannten Stimme umfassenden Sprachdatenabschnitt, basierend auf dem registrierten Stimmerkennungsmerkmal, einer Sprachähnlichkeit zwischen der registrierten Stimme und dem Sprachdatenabschnitt umfasst:

Wiederholen jedes Sprachsegments in der zunächst erkannten Stimme basierend auf einer Zeitlänge der registrierten Stimme jeweils getrennt, um eine rekombinierte Stimme mit der Zeitlänge zu erhalten;

Erhalten eines rekombinierten Stimmerkennungsmerkmals, das aus der rekombinierten Stimme extrahiert wird, und Bestimmen eines Segmentstimmerkennungsmerkmals, das jedem Sprachsegment in der zunächst erkannten Stimme basierend auf dem rekombinierten Stimmerkennungsmerkmal entspricht; und

Bestimmen einer Sprachähnlichkeit zwischen der registrierten Stimme und jedem Sprachsegment basierend auf dem Segmentstimmerkennungsmerkmal, das jedem Sprachsegment entspricht, und dem registrierten Stimmerkennungsmerkmal jeweils getrennt.

8. Das Verfahren nach einem der Ansprüche 1 bis 7, wobei nachdem die Mischstimme und die registrierte Stimme erhalten worden sind, ein Entrauschen getrennt an der Mischstimme und der registrierten Stimme unter Verwendung eines trainierten Entrauschungsnetzwerks durchgeführt wird, und wobei das Verfahren ferner umfasst:

Erhalten einer Beispielrauschstimme, wobei die Beispielrauschstimme durch Hinzufügen von Rauschen zu einer als Referenz verwendeten sauberen Referenzstimme erhalten wird;

Eingeben der Beispielrauschstimme in ein zu trainierendes Entrauschungsnetzwerk, um die Beispielrauschstimme unter Verwendung des zu trainierenden Entrauschungsnetzwerks zu entrauschen, um eine Vorhersagestimme nach Durchführung des Entrauschens zu erhalten; und

Iteratives Trainieren des zu trainierenden Entrauschungsnetzwerks basierend auf einem Unterschied zwischen der Vorhersagestimme und der sauberen Referenzstimme, um das trainierte Entrauschungsnetzwerk zu erhalten.

9. Das Verfahren nach einem der Ansprüche 1 bis 8, wobei ein Vorgang des Bestimmens, , für jeden in der zunächst erkannten Stimme umfassenden Sprachdatenabschnitt, basierend auf dem registrierten Stimmerkennungsmerkmal, einer Sprachähnlichkeit zwischen der registrierten Stimme und dem Sprachdatenabschnitt und ein Vorgang des Herausfilterns aus der zunächst erkannten Stimme von Sprachinformationen, deren Sprachähnlichkeit geringer ist als eine voreingestellte Ähnlichkeit, um eine saubere Stimme des Sprechers zu erhalten, in einem ersten Verarbeitungsmodus durchgeführt werden, und wobei das Verfahren ferner umfasst:

Erhalten einer Störstimme in einem zweiten Verarbeitungsmodus, wobei die Störstimme aus der Mischstimme basierend auf dem registrierten Stimmerkennungsmerkmal extrahiert wird;

Erhalten des Mischstimmenmerkmals der Mischstimme, eines Stimmmerkmals der zunächst erkannten Stimme und eines Stimmmerkmals der Störstimme;

Durchführen einer Fusion des Mischstimmenmerkmals und des Stimmmerkmals der zunächst erkannten Stimme basierend auf einem Aufmerksamkeitsmechanismus, um ein erstes Aufmerksamkeitsmerkmal zu erhalten;

Durchführen einer Fusion des Mischstimmenmerkmals und des Stimmmerkmals der Störstimme basierend auf einem Aufmerksamkeitsmechanismus, um ein zweites Aufmerksamkeitsmerkmal zu erhalten; und

Erhalten der sauberen Stimme des Sprechers basierend auf einem Fusionsmerkmal, das durch Fusionieren des Mischstimmenmerkmals, des ersten Aufmerksamkeitsmerkmals und des zweiten Aufmerksamkeitsmerkmals erhalten wird.

10. Das Verfahren nach Anspruch 9, wobei das Erhalten der sauberen Stimme des Sprechers basierend auf einem Fusionsmerkmal, das durch Fusionieren des Mischstimmenmerkmals, des ersten Aufmerksamkeitsmerkmals und des zweiten Aufmerksamkeitsmerkmals erhalten wird, umfasst:

Fusionieren des Mischstimmenmerkmals, des ersten Aufmerksamkeitsmerkmals, des zweiten Aufmerksamkeitsmerkmals und des registrierten Stimmerkennungsmerkmals und Erhalten der sauberen Stimme des Sprechers basierend auf dem Fusionsmerkmal;

wobei, vorzugsweise, die zunächst erkannte Stimme und die Störstimme aus der Mischstimme unter Verwendung eines trainierten Stimmextraktionsmodells extrahiert werden, und wobei das Verfahren ferner umfasst:

Eingeben der Mischstimme und des registrierten Stimmerkennungsmerkmals in das Stimmextraktionsmodell;

Erzeugen erster Maskeninformation und zweiter Maskeninformation basierend auf der Mischstimme und dem registrierten Stimmerkennungsmerkmal unter Verwendung des Stimmextraktionsmodells;

Maskieren von Störinformationen in der Mischstimme basierend auf der ersten Maskeninformation unter Verwendung des Stimmextraktionsmodells, um die zunächst erkannte Stimme des Sprechers zu erhalten; und

Maskieren der Sprachinformationen des Sprechers in der Mischstimme basierend auf der zweiten Maskeninformation unter Verwendung des Stimmextraktionsmodells, um die Störstimme zu erhalten; wobei, vorzugsweise, trainierte Modellparameter in dem Stimmextraktionsmodell einen ersten Maskenabbildungsparameter und einen zweiten Maskenabbildungsparameter umfassen, und wobei das Erzeugen erster Maskeninformation und zweiter Maskeninformation basierend auf der Mischstimme und dem registrierten Stimmerkennungsmerkmal unter Verwendung des Stimmextraktionsmodells umfasst:

Erzeugen der ersten Maskeninformation basierend auf dem ersten Maskenabbildungsparameter des Stimmextraktionsmodells, der Mischstimme und dem registrierten Stimmerkennungsmerkmal; und

Erzeugen der zweiten Maskeninformation basierend auf dem zweiten Maskenabbildungsparameter des Stimmextraktionsmodells, der Mischstimme und dem registrierten Stimmerkennungsmerkmal.

11. Das Verfahren nach einem der Ansprüche 10, wobei das Mischstimmenmerkmal der Mischstimme, das Stimmmerkmal der zunächst erkannten Stimme und das Stimmmerkmal der Störstimme durch eine Merkmalsextraktionsschicht extrahiert werden, nachdem die Mischstimme, die zunächst erkannte Stimme und die Störstimme jeweils getrennt in die Merkmalsextraktionsschicht in einem sekundären Verarbeitungsmodell eingegeben worden sind;

das erste Aufmerksamkeitsmerkmal durch eine erste Aufmerksamkeits-einheit in dem sekundären Verarbeitungsmodell erhalten wird, die Fusion auf dem Mischstimmenmerkmal und dem Stimmmerkmal der zunächst erkannten Stimme basierend auf einem Aufmerksamkeitsmechanismus durchführt; und

das zweite Aufmerksamkeitsmerkmal durch eine zweite Aufmerksamkeits-einheit in dem sekundären Verarbeitungsmodell erhalten wird, die Fusion auf dem Mischstimmenmerkmal und dem Stimmmerkmal der Störstimme basierend auf einem Aufmerksamkeitsmechanismus durchführt; wobei, vorzugsweise, die zunächst erkannte Stimme und die Störstimme aus der Mischstimme unter Verwendung eines primären Stimmextraktionsmodells extrahiert werden, das sekundäre Verarbeitungsmodell ferner eine Merkmalfusionsschicht und ein sekundäres Stimmextraktionsmodell umfasst, und wobei das Erhalten der sauberen Stimme des Sprechers basierend auf einem Fusionsmerkmal, das durch Fusionieren des Mischstimmenmerkmals, des ersten Aufmerksamkeitsmerkmals und des zweiten Aufmerksamkeitsmerkmals erhalten wird, umfasst:

Eingeben des Mischstimmenmerkmals, des ersten Aufmerksamkeitsmerkmals, des zweiten Aufmerksamkeitsmerkmals und des registrierten Stimmerkennungsmerkmals in die Merkmalfusionsschicht zur Fusion, um ein Stimmenfusionsmerkmal zu erhalten; und

Eingeben des Stimmenfusionsmerkmals in das sekundäre Stimmextraktionsmodell, um die saubere Stimme des Sprechers basierend auf dem Stimmenfusionsmerkmal unter Verwendung des sekundären Stimmextraktionsmodells zu erhalten.

12. Das Verfahren nach einem der Ansprüche 1 bis 11, wobei das Erhalten einer registrierten Stimme eines Sprechers und das Erhalten einer Mischstimme umfasst:

Bestimmen eines durch eine Anrufauslöseoperation spezifizierten Sprechers als Reaktion auf die Anrufauslöseoperation und Bestimmen der registrierten Stimme des Sprechers aus einer vorgespeicherten Kandidaten-registrierten Stimme;

für den Fall, dass ein Sprachanruf mit einem dem Sprecher entsprechenden Endgerät basierend auf der Anrufauslöseoperation aufgebaut wird, Empfangen der durch das dem Sprecher entsprechende Endgerät in dem Sprachanruf gesendeten Mischstimme.

13. Das Verfahren nach einem der Ansprüche 1 bis 11, wobei das Erhalten einer registrierten Stimme eines Sprechers und das Erhalten einer Mischstimme umfasst:

Erhalten einer Multimedia-Stimme eines Multimedia-Objekts, wobei die Multimedia-Stimme eine Mischstimme ist, die Sprachinformationen einer Mehrzahl von Sprechern umfasst;

Erhalten einer Kennung eines spezifizierten Sprechers als Reaktion auf eine spezifizierte Operation für einen Sprecher in der Multimedia-Stimme, wobei der Sprecher ein Sprecher ist, der aus der Mehrzahl klingender Objekte spezifiziert wird und dessen Stimme extrahiert werden muss; und

Erhalten einer registrierten Stimme mit einer Abbildungsbeziehung zu der Kennung des Sprechers aus einer vorgespeicherten registrierten Stimme für jeden Sprecher in der Multimedia-Stimme, um die registrierte Stimme des Sprechers zu erhalten.

14. Eine Sprachverarbeitungsvorrichtung, umfassend:

ein Erfassungsmodul (1202), eingerichtet zum Erhalten einer registrierten Stimme eines Sprechers und zum Erhalten einer Mischstimme, wobei die Mischstimme Sprachdaten einer Mehrzahl klingender Objekte umfasst, zu denen der Sprecher gehört;

ein erstes Extraktionsmodul (1204), eingerichtet zum Bestimmen eines registrierten Stimmerkennungsmerkmals der registrierten Stimme und zum Extrahieren einer zunächst erkannten Stimme des Sprechers aus der Mischstimme basierend auf dem registrierten Stimmerkennungsmerkmal, wobei die zunächst erkannte Stimme einen oder mehrere Sprachdatenabschnitte umfasst;

ein Bestimmungsmodul (1206), eingerichtet zum Bestimmen, für jeden in der zunächst erkannten Stimme umfassenden Sprachdatenabschnitt, basierend auf dem registrierten Stimmerkennungsmerkmal, einer Sprachähnlichkeit zwischen der registrierten Stimme und dem Sprachdatenabschnitt; und

ein Filtermodul (1208), eingerichtet zum Herausfiltern aus der zunächst erkannten Stimme von Sprachinformationen, deren Sprachähnlichkeit geringer ist als eine voreingestellte Ähnlichkeit, um eine saubere Stimme des Sprechers zu erhalten.

15. Eine Recheneinrichtung, umfassend einen Speicher und einen Prozessor, wobei der Speicher computerlesbare Anweisungen gespeichert hat, und wobei die computerlesbaren Anweisungen, wenn sie durch den Prozessor ausgeführt werden, das Verfahren nach einem der Ansprüche 1 bis 13 durchführen.

## Revendications

1. Appareil de traitement de la voix comprenant:

l'obtention d'une voix enregistrée d'un locuteur, et l'obtention d'une voix mixte, la voix mixte comprenant des données vocales d'une pluralité d'objets sonores, auxquels appartient le locuteur (202);

la détermination d'une caractéristique de voix enregistrée de la voix enregistrée (204);

l'extraction d'une voix initialement reconnue du locuteur à partir de la voix mixte sur la base de la caractéristique vocale enregistrée (206), la voix initialement reconnue comprenant une ou plusieurs portions de données vocales;

la détermination, pour chaque portion de données vocales comprise dans la voix initialement reconnue, sur la base de la caractéristique vocale enregistrée, d'une similarité vocale entre la voix enregistrée et la portion de données vocales (208); et

le filtrage, à partir de la voix initialement reconnue, des informations vocales dont la similarité vocale est inférieure à une similarité prédéfinie, afin d'obtenir une voix claire du locuteur (210).

2. Procédé selon la revendication 1, dans lequel l'extraction d'une voix initialement reconnue du locuteur à partir de la voix mixte sur la base de la caractéristique vocale enregistrée consiste à:

déterminer une caractéristique vocale enregistrée de la voix enregistrée;

fusionner la caractéristique de voix mixte et la caractéristique de voix enregistrée de la voix enregistrée pour obtenir une caractéristique de fusion vocale; et

effectuer une reconnaissance initiale des informations vocales du locuteur dans la voix mixte sur la base de la caractéristique de fusion vocale afin d'obtenir la voix initialement reconnue du locuteur.

3. Procédé selon la revendication 2, dans lequel la caractéristique de voix mixte comprend une matrice de caractéristiques de voix mixte, la caractéristique de fusion vocale comprend une matrice de caractéristiques de fusion vocale, la caractéristique vocale enregistrée comprend un vecteur de caractéristique de voix enregistrée, et la fusion de la caractéristique de voix mixte et de la caractéristique de voix enregistrée de la voix enregistrée pour obtenir une caractéristique de fusion vocale consiste à:

répéter le vecteur de caractéristique de voix enregistrée dans une dimension temporelle afin de générer une matrice de caractéristiques de voix enregistrée, la dimension temporelle de la matrice de caractéristiques de voix enregistrée étant identique à la dimension temporelle de la matrice de caractéristiques de voix mélangée; et fusionner la matrice de caractéristiques de voix mixte et la matrice de caractéristiques de voix enregistrée pour obtenir une matrice de caractéristiques de fusion vocale.

4. Procédé selon la revendication 2 ou 3, dans lequel la détermination d'une caractéristique de voix enregistrée de la voix enregistrée; consiste à:

extraire un spectre d'amplitude de la voix mixte pour obtenir un premier spectre d'amplitude;

effectuer une extraction de caractéristique sur le premier spectre d'amplitude afin d'obtenir une caractéristique du spectre d'amplitude; et effectuer une extraction de caractéristique sur la caractéristique du spectre d'amplitude afin d'obtenir la caractéristique de voix mixte de la voix mixte.

5. Procédé selon la revendication 2, dans lequel la reconnaissance initiale des informations vocales du locuteur dans la voix mixte sur la base de la caractéristique de fusion vocale afin d'obtenir la voix initialement reconnue du locuteur consiste à:

effectuer une reconnaissance initiale des informations vocales du locuteur dans la voix mixte sur la base de la caractéristique de fusion vocale afin d'obtenir une caractéristique vocale du locuteur;
effectuer un décodage de caractéristique sur la caractéristique de voix du locuteur afin d'obtenir un deuxième spectre d'amplitude; et
transformer le deuxième spectre d'amplitude sur la base d'un spectre de phase de la voix mixte afin d'obtenir la voix initialement reconnue du locuteur.

6. Procédé selon l'une quelconque des revendications 1 à 5, dans lequel la détermination d'une caractéristique de voix enregistrée de la voix enregistrée consiste à:

extraire un spectre de fréquence de la voix enregistrée;
générer un spectre de fréquences mel de la voix enregistrée sur la base du spectre de fréquence; et
effectuer une extraction de caractéristique sur le spectre de fréquence mel afin d'obtenir la caractéristique de voix enregistrée de la voix enregistrée.

7. Procédé selon l'une quelconque des revendications 1 à 6, dans lequel les informations vocales de la voix initialement reconnue comprennent des segments vocaux, et la détermination, pour chaque portion de données vocales comprise dans la voix initialement reconnue, sur la base de la caractéristique de voix enregistrée, d'une similarité vocale entre la voix enregistrée et la portion de données vocales, consiste à:

répéter chaque segment vocal de la voix initialement reconnue en fonction d'une durée de la voix enregistrée séparément afin d'obtenir une voix recombinée ayant ladite durée;
obtenir une caractéristique de voix recombinée extraite de la voix recombinée, et déterminer une caractéristique de voix de segment correspondant à chaque segment vocal dans la voix initialement reconnue sur la base de la caractéristique de voix recombinée; et
déterminer une similarité vocale entre la voix enregistrée et chaque segment vocal sur la base de la caractéristique de voix de segment correspondant à chaque segment vocal et de la caractéristique de voix enregistrée séparément.

8. Procédé selon l'une quelconque des revendications 1 à 7, dans lequel une fois que la voix mixte et la voix enregistrée sont obtenues, un débruitage est effectué sur la voix mixte et la voix enregistrée à l'aide d'un réseau de débruitage entraîné séparé, et le procédé comprend en outre:

l'obtention d'une voix de bruit échantillon, dans lequel la voix de bruit échantillon étant obtenue par ajout d'un bruit à une voix claire de référence utilisée comme référence ;
l'entrée de la voix de bruit échantillon dans un réseau de débruitage à entraîner, afin de débruiter la voix de bruit échantillon à l'aide du réseau de débruitage à entraîner pour obtenir une voix de prédiction après le débruitage; et
entraîner de manière itérative le réseau de débruitage à entraîner sur la base d'une différence entre la voix de prédiction et la voix claire de référence afin d'obtenir le réseau de débruitage entraîné.

9. Procédé selon l'une quelconque des revendications 1 à 8, dans lequel une opération consistant à déterminer, pour chaque portion de données vocales comprise dans la voix initialement reconnue, sur la base de la caractéristique de voix enregistrée, une similarité vocale entre la voix enregistrée et la portion de données vocales, et une opération consistant à filtrer, à partir de la voix initialement reconnue, les informations vocales dont la similarité vocale est inférieure à une similarité prédéfinie, afin d'obtenir une voix claire du locuteur, sont effectuées dans un premier mode de traitement, et le procédé comprend en outre:

l'obtention d'une voix d'interférence dans un deuxième mode de traitement, la voix d'interférence étant extraite de la voix mixte sur la base de la caractéristique de voix enregistrée;
l'obtention de la caractéristique de voix mixte de la voix mixte, une caractéristique de voix de la voix initialement reconnue et une caractéristique de voix de la voix d'interférence;
la fusion entre la caractéristique de voix mixte et la caractéristique de voix de la voix initialement reconnue sur la base d'un mécanisme d'attention afin d'obtenir une première caractéristique d'attention;

la fusion entre la caractéristique de voix mixte et la caractéristique de voix de la voix d'interférence sur la base d'un mécanisme d'attention afin d'obtenir une seconde caractéristique d'attention;

l'obtention de la voix claire du locuteur sur la base d'une caractéristique fusionnée obtenue par fusion de la caractéristique de voix mixte, de la première caractéristique d'attention et de la deuxième caractéristique d'attention.

10. Procédé selon la revendication 9, dans lequel l'obtention de la voix claire du locuteur sur la base d'une caractéristique fusionnée obtenue par fusion de la caractéristique de voix mixte, de la première caractéristique d'attention et de la deuxième caractéristique d'attention consiste à:

fusionner la caractéristique de voix mixte, la première caractéristique d'attention, la deuxième caractéristique d'attention et la caractéristique de voix enregistrée, et obtenir la voix claire du locuteur sur la base de la caractéristique fusionnée;

dans lequel, de préférence, la voix initialement reconnue et la voix d'interférence sont extraites de la voix mixte à l'aide d'un modèle d'extraction de voix entraîné, et le procédé comprend en outre:

l'entrée de la voix mixte et de la fonctionnalité de voix enregistrée dans le modèle d'extraction de voix;

la génération de premières informations de masque et de deuxièmes informations de masque sur la base de la voix mixte et de la caractéristique de voix enregistrée à l'aide du modèle d'extraction de voix;

le masquage des informations d'interférence dans la voix mixte sur la base des premières informations de masquage à l'aide du modèle d'extraction de voix pour obtenir la voix initialement reconnue du locuteur; et

le masquage des informations vocales du locuteur dans la voix mixte sur la base des deuxièmes informations de masque à l'aide du modèle d'extraction de voix pour obtenir la voix d'interférence;

dans lequel, de préférence, les paramètres de modèle entraîné dans le modèle d'extraction de voix comprennent un premier paramètre de mappage de masque et un deuxième paramètre de mappage de masque, et la génération des premières informations de masque et des deuxièmes informations de masque sur la base de la voix mixte et de la caractéristique de voix enregistrée à l'aide du modèle d'extraction de voix consiste à:

générer les premières informations de masque sur la base du premier paramètre de mappage de masque du modèle d'extraction de voix, de la voix mixte et de la caractéristique de voix enregistrée; et
générer les deuxièmes informations de masque sur la base du deuxième paramètre de mappage de masque du modèle d'extraction de voix, de la voix mixte et de la caractéristique de voix enregistrée.

11. Procédé selon l'une quelconque des revendications 10, dans lequel la caractéristique de voix mixte de la voix mixte, la caractéristique de voix de la voix initialement reconnue et la caractéristique de voix de la voix d'interférence sont extraites par une couche d'extraction de caractéristiques après que la voix mixte, la voix initialement reconnue et la voix parasite ont été séparément entrées dans la couche d'extraction de caractéristique dans un modèle de traitement secondaire;

la première caractéristique d'attention est obtenue par une première unité d'attention dans le modèle de traitement secondaire qui fusionne la caractéristique de voix mixte et la caractéristique de voix de la voix initialement reconnue sur la base d'un mécanisme d'attention; et
la deuxième caractéristique d'attention est obtenue par une deuxième unité d'attention dans le modèle de traitement secondaire qui fusionne la caractéristique vocale mixte et la caractéristique de voix de la voix d'interférence sur la base d'un mécanisme d'attention;

dans lequel, de préférence, la voix initialement reconnue et la voix d'interférence sont extraites de la voix mixte à l'aide d'un modèle d'extraction de voix primaire, le modèle de traitement secondaire comprend en outre une couche de fusion de caractéristiques et un modèle d'extraction secondaire de voix, et l'obtention de la voix claire du locuteur sur la base d'une caractéristique fusionnée obtenue par fusion de la caractéristique de voix mixte, de la première caractéristique d'attention et de la deuxième caractéristique d'attention consiste à:

entrer la caractéristique de voix mixte, la première caractéristique d'attention, la deuxième caractéristique d'attention et la caractéristique de voix enregistrée dans la couche de fusion de caractéristique pour les fusionner afin d'obtenir une caractéristique de fusion vocale; et

entrer la fonctionnalité de fusion vocale dans le modèle secondaire d'extraction de voix afin d'obtenir la voix claire du locuteur sur la base de la fonctionnalité de fusion vocale à l'aide du modèle secondaire d'extraction de voix.

12. Procédé selon l'une quelconque des revendications 1 à 11, dans lequel l'obtention d'une voix enregistrée d'un locuteur et l'obtention d'une voix mixte consiste à:

déterminer un locuteur spécifié par une opération de déclenchement d'appel en réponse à l'opération de déclenchement d'appel, et déterminer la voix enregistrée du locuteur à partir d'une voix enregistrée candidate préenregistrée;

dans le cas où un appel vocal serait établi avec un terminal correspondant à l'interlocuteur sur la base de l'opération de déclenchement d'appel, recevoir la voix mixte transmise par le terminal correspondant à l'interlocuteur dans l'appel vocal.

13. Procédé selon l'une quelconque des revendications 1 à 11, dans lequel l'obtention d'une voix enregistrée d'un locuteur, et l'obtention d'une voix mixte, consiste à:

obtenir une voix multimédia d'un objet multimédia, la voix multimédia étant une voix mixte comprenant des informations vocales provenant d'une pluralité de locuteurs;

obtenir un identifiant d'un locuteur spécifié en réponse à une opération spécifiée pour un locuteur dans la voix multimédia, le locuteur étant un locuteur qui est spécifié parmi la pluralité d'objets sonores et dont la voix doit être extraite; et

obtenir une voix enregistrée ayant une relation de mappage avec l'identifiant du locuteur à partir d'une voix enregistrée mémorisée au préalable pour chaque locuteur dans la voix multimédia afin d'obtenir la voix enregistrée du locuteur.

14. Appareil de traitement de la voix comprenant:

un module d'obtention (1202), configuré pour obtenir une voix enregistrée d'un locuteur, et obtenir une voix mixte, la voix mixte comprenant des données vocales d'une pluralité d'objets sonores, auxquels appartient le locuteur;

un premier module d'extraction (1204), configuré pour déterminer une caractéristique de voix enregistrée de la voix enregistrée, et pour extraire une voix initialement reconnue du locuteur à partir de la voix mixte sur la base de la caractéristique de voix enregistrée, la voix initialement reconnue comprenant une ou plusieurs portions de données vocales;

un module de détermination (1206), configuré pour déterminer, pour chaque portion de données vocales comprise dans la voix initialement reconnue, sur la base de la caractéristique vocale enregistrée, une similarité vocale entre la voix enregistrée et la portion de données vocales; et

un module de filtrage (1208), configuré pour filtrer, à partir de la voix initialement reconnue, des informations vocales dont la similarité vocale est inférieure à une similarité prédéfinie, afin d'obtenir une voix claire du locuteur.

15. Dispositif informatique, comprenant une mémoire et un processeur, la mémoire sur laquelle sont stockées des instructions lisibles par ordinateur et les instructions lisible par ordinateur, lorsqu'elles sont exécutées par le processeur, mettent en œuvre le procédé selon l'une quelconque des revendications 1 à 13.

FIG. 1

202

Obtain a registered voice of a speaker, and obtain a mixed voice, the mixed voice comprising voice data of a plurality of sounding objects, to which the speaker belongs

204

Determine a registered voice feature of the registered voice

206

Extract an initially recognized voice of the speaker from the mixed voice based on the registered voice feature

208

Determine, for each voice data portion comprised in the initially recognized voice, based on the registered voice feature, a voice similarity between the registered voice and the voice data portion

210

Filter out, from the initially recognized voice, voice information of which voice similarity is lower than a preset similarity, to obtain a clean voice of the speaker

FIG. 2

Registered voice feature

Mixed voice → Fourier transform unit → First amplitude spectrum → Encoder → Amplitude spectrum feature → Long short-term memory unit → Second amplitude spectrum → Inverse Fourier transform unit → Initial recognition voice

Phase spectrum

FIG. 3

FIG. 4

FIG. 5

FIG. 6

Registered
voice → **Mel-frequency spectrum generation unit** → **Long short-term memory unit** → **Feature generation unit** → Registered voice feature vector

## FIG. 7

**Register**
↓
Film and video or voice call → **Extract and filter**
↓
**Clean voice**

## FIG. 8

Denoised registered voice → **Registered network** → Registered voice feature

Initial registered voice →

Initial mixed voice → **Denoising network** → Denoised mixed voice → **Voice extraction network** → **Filtering processing unit** → Clean voice

## FIG. 9

FIG. 10

~ 1102

Obtain a mixed voice and a registered voice of a speaker, the mixed voice including voice information of the speaker, and the voice information including voice segments

~ 1104

Input the mixed voice and a registered voice feature into a voice extraction model, and based on the mixed voice and the registered voice feature, generate at least first mask information in a first mode and generate the first mask information and second mask information in a second mode

~ 1106

Mask out interference information in the mixed voice based on the first mask information to obtain an initially recognized voice of the speaker

~ 1108

Mask out the voice information of the speaker in the mixed voice based on the second mask information to obtain an interference voice

~ 1110

Repeat each voice segment for each voice segment in the initially recognized voice to obtain a recombined voice having the same time length as the registered voice in a first processing mode, the recombined voice including a plurality of voice segments

~ 1112

Determine a segment voice feature corresponding to each voice segment based on a recombined voice feature of the recombined voice

~ 1114

Determine a voice similarity between the registered voice and each voice segment based on the segment voice feature and the registered voice feature

~ 1116

Determine voice information of which voice similarity is lower than a preset similarity from the initially recognized voice to obtain to-be-filtered voice information

~ 1118

Filter the to-be-filtered voice information from the initially recognized voice to obtain a clean voice of the speaker

~ 1120

In a second processing mode, perform fusion on a mixed voice feature of the mixed voice and a voice feature of the initially recognized voice based on an attention mechanism to obtain a first attention feature, and perform fusion on the mixed voice feature and a voice feature of the interference voice based on an attention mechanism to obtain a second attention feature

~ 1122

Fuse the mixed voice feature, the first attention feature, the second attention feature, and the registered voice feature, and obtain the clean voice of the speaker based on a fused feature

FIG. 11

Voice processing apparatus 1200

~1202

Obtaining module

~1204

First extraction module

~1206

Determining module

~1208

Filtering module

FIG. 12

Memory

Operating system

Computer-readable instruction

Non-volatile storage medium

Processor

Internal memory

System bus

Input/Output interface

Input apparatus

Communication interface

Display unit

Computer device

FIG. 13

# EP 4 506 935 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022112978433
- CN 113345461 A

- US 2020227064 A1, XU JIAMING

**Non-patent literature cited in the description**

- VoiceFilter: Targeted Voice Separation by Speaker-Conditioned Spectrogram Masking. **QUAN WANG et al.** ARXIV.ORG. CORNELL UNIVERSITY LIBRARY, 11 October 2018

- A Unified Framework for Neural Speech Separation and Extraction. **OCHIAI TSUBASA et al.** ICASSP 2019 - 2019 IEEE INTERNATIONAL CONFERENCE ON ACOUSTICS, SPEECH AND SIGNAL PROCESSING (ICASSP). IEEE, 12 May 2019, 6975-6979